# EUROPÄISCHE PATENTSCHRIFT

(11) **EP 2 519 372 B1**
(45) Veröffentlichungstag und Bekanntmachung des Hinweises auf die Patenterteilung: **01.06.2016**
(21) Anmeldenummer: 10787341.6
(22) Anmeldetag: 23.11.2010
(51) Int. Cl.: B23B 51/02, B28D 1/14, E21B 10/44, E21B 10/58

(54) **Gesteinsbohrwerkzeug**
Masonry drilling tool
Foret à roche

(30) Priorität: 23.09.2010 DE 102010041238; 30.12.2009 DE 102009060856; 21.04.2010 DE 102010017987
(43) Veröffentlichungstag der Anmeldung: 07.11.2012
(73) Patentinhaber: Robert Bosch GmbH, 70442 Stuttgart (DE)
(72) Erfinder: SCHWARZ, Gerhard, 88273 Fronreute (DE)
(86) Internationale Anmeldenummer: PCT/EP2010/067980
(87) Internationale Veröffentlichungsnummer: WO 2011/080009

(56) Entgegenhaltungen:
- EP-A1- 1 604 762
- EP-A1- 1 865 144
- EP-A1- 1 923 159
- DE-A1- 10 208 630
- DE-A1-102006 020 538

## Beschreibung

Die Erfindung betrifft ein Gesteinsbohrwerkzeug zur dreh-schlagenden Bearbeitung von Beton, Gestein, Mauerwerk und dergleichen Materialien gemäß dem Oberbegriff des Anspruchs 1. Ein solches Gesteinbohrwerkzeug ist beispielweise aus der EP 1 604 762 A1 bekannt.

### Stand der Technik

Aus der DE 102 08 630 A1 ist ein Gesteinsbohrwerkzeug zur dreh-schlagenden Bearbeitung von Beton, Gestein, Mauerwerk und dergleichen Materialien bekannt, wobei das Gesteinsbohrwerkzeug einen Bohrerkopf, welcher einen Schneidkörper umfasst, und eine zwischen dem Bohrerkopf und einem Schaft angeordnete Wendel umfasst, wobei sich der Schneidkörper ununterbrochen über einen Nenndurchmesser des Gesteinsbohrwerkzeugs erstreckt, wobei der Schneidkörper einen als Zentrierspitze ausgebildeten Innenbereich und einen in radialer Richtung an die Zentrierspitze angrenzenden Außenbereich umfasst, wobei der Außenbereich gegenüber der Zentrierspitze in Wirkrichtung des Gesteinsbohrwerkzeugs zurückversetzt ist, wobei die Zentrierspitze als Pyramide oder als Pyramidenstumpf ausgebildet ist und Pyramidenkanten aufweist, wobei zwischen den Pyramidenkanten Seitenflächen liegen und wobei eine Spitze der Pyramide bzw. des Pyramidenstumpfs von einer Längsmittelachse des Bohrwerkzeugs durchlaufen wird.

Der Erfindung liegt die Aufgabe zu Grunde ein Gesteinsbohrwerkzeug zu schaffen, dessen Abtragsleistung im Bereich seiner Zentrierspitze erhöht ist.

Diese Aufgabe wird ausgehend von den Merkmalen des Oberbegriffs des Anspruchs 1 durch die kennzeichnenden Merkmale des Anspruchs 1 gelöst. In den Unteransprüchen sind vorteilhafte und zweckmäßige Weiterbildungen angegeben.

### Offenbarung der Erfindung

Die Erfindung betrifft ein Gesteinsbohrwerkzeug zur dreh-schlagenden Bearbeitung von Beton, Gestein, Mauerwerk und dergleichen Materialien, bei welchem wenigstens eine Seitenfläche der Zentrierspitze, welche als Pyramide oder als Pyramidenstumpf ausgebildet ist, wie eine Mulde geformt ist. Hierdurch erhält die Zentrierspitze im Bereich einer an die Mulde angrenzende Pyramidenkante ein aggressiveres Bohr- und Schlagverhalten, da die Pyramidenkante in die Mulde hinein stärker entgegen der Wirkrichtung des Gesteinsbohrwerkzeugs zurückweicht als dies bei einer vergleichbaren Zentrierspitze mit ebenen Seitenflächen der Fall ist. Kern der Erfindung ist somit eine Steigerung der Aggressivität bzw. der Eindringleistung eines Gesteinsbohrwerkzeugs für den dreh-schlagenden Betrieb, welche - unter Beibehaltung einer bewährten Grundgeometrie - durch die gezielte Umwandlung mindestens einer ausgewählten ebenen Fläche der Grundgeometrie in eine Mulde erzielt wird. Durch die Ausbildung wenigstens einer Seitenfläche der als Pyramide oder Pyramidenstumpf ausgebildeten Zentrierspitze als Mulde ist es möglich im Bereich einer Pyramidenkante einen kleineren negativen Spanwinkel bzw. einen kleineren Keilwinkel zu erreichen und so die Leistungsfähigkeit des Gesteinsbohrwerkzeugs an der Zentrierspitze hinsichtlich der schlagenden Zerstörung und hinsichtlich der abschälenden Wirkung zu verstärken. Kern der Erfindung ist somit ein Gesteinsbohrwerkzeug, welches durch gezielte Materialwegnahme im Bereich der Zentrierspitze auf der Grundlage bewährter Gesteinsbohrvverkzeuge gestaltet wird.

Erfindungsgemäß ist es vorgesehen, wenigstens zwei benachbarte Seitenflächen der Zentrierspitze jeweils als Mulde auszubilden. Hierdurch ergibt sich im Bereich der Pyramidenkante, an welcher die beiden Mulden ineinander übergehen, gegenüber einem Gesteinsbohrwerkzeug mit planen Flächen zwischen den Pyramidenkanten eine Haupt- oder Nebenschneide, deren negativer Spanwinkel verkleinert ist und deren Freiwinkel vergrößert ist, so dass die Haupt- bzw. Nebenschneide - im Schnitt betrachtet - einen verkleinerten Keilwinkel zeigt und dadurch beim Schlagen und beim Drehen eine verstärkte Wirkung aufweist.

Alternativ kann die Erfindung auch vorsehen, alle Seitenflächen der Zentrierspitze jeweils als Mulde auszubilden. Hierdurch ergeben sich an allen Haupt- und Nebenschneiden der Schneidspitze die im vorhergehenden Absatz genannten Vorteile.

Eine Weiterbildung der Erfindung sieht weiterhin vor, im Bereich der zwischen zwei Mulden liegenden Pyramidenkante der Zentrierspitze einen Keil zu bilden, dessen Keilflächen durch Oberflächenabschnitte der benachbarten Mulden gebildet ist, wobei ein Keilwinkel des Keils kleiner ist als ein Keilwinkel einer Zentrierspitze mit ebenen Seitenflächen. Derartige Keile bilden jeweils Haupt- oder Nebenschneiden der Zentrierspitze und dienen einem erhöhten Materialabtrag.

Weiterhin kann die Erfindung vorsehen, eine in Drehrichtung des Gesteinsbohrwerkzeugs vor der Pyramidenkante liegende Mulde als Spanflächenmulde auszubilden und eine in Drehrichtung des Gesteinsbohrwerkzeugs hinter der Pyramidenkante liegende Mulde als Freiflächenmulde auszubilden, wobei die Spanflächenmulde zu der Pyramidenkante hin stärker ansteigt als die Freiflächenmulde. Hierdurch wird ein Keil bzw. eine Haupt- oder Nebenschneide erreicht, bei welcher der Betrag des negativen Spanwinkels weniger als die Hälfte des Keilwinkels beträgt und somit aggressiv und stabil ist.

Eine Weiterbildung der Erfindung sieht weiterhin vor, die Grundfläche der Pyramide insbesondere als Vieleck mit einer ungeraden Eckenzahl oder insbesondere als Vieleck mit einer geraden Eckenzahl auszubilden. Vielecke mit geraden Eckenzahlen sind insbesondere als Grundflächen für Zentrierspitzen mit vier oder sechs Pyramidenkanten geeignet, welche symmetrisch zu einer Ebene sind, welche von der Längsmittelachse des Gesteinsbohrwerkzeugs durchlaufen wird. Vielecke mit ungeraden Eckenzahlen sind insbesondere als Grundflächen für Zentrierspitzen mit fünf, sieben oder mehr Pyramidenkanten geeignet, bei welchen die Orientierung der Pyramidenkanten von einer Orientierung von äußeren Schneidkanten unabhängig ist.

Die Erfindung kann auch vorsehen, wenigsten eine der Mulden in Richtung eines Schwerpunkts der Zentrierspitze zu vertiefen. Hierdurch entsteht ein in seiner Leistung gesteigerter Gesteinsbohrer mit einem Schneidkörper, für welchen für die Herstellung im Vergleich zu einem Gesteinsbohrer mit einem Schneidkörper mit planen Flächen weniger Hartmetall erforderlich ist.

Weiterhin kann die Erfindung vorsehen, wenigstens zwei der Pyramidenkanten als innere Schneidkanten und insbesondere als ununterbrochene Fortsetzung von äußeren Schneidkanten des Schneidkörpers zu bilden. Bei einer derartigen Positionierung der inneren Scheidkanten der Zentrierspitze und der äußeren Schneidkanten des Außenbereichs des Schneidkörpers entsteht ein Schneidkörper, welcher auch in einem Übergangsbereich zwischen der Zentrierspitze und dem Außenbereich des \ Schneidkörpers insbesondere auch auf das Schneiden optimiert ist und somit auch im ausschließlich drehenden Betrieb, welcher teilweise beim Anbohren verwendet wird, eine gute Abschälleistung und insbesondere einen ruhigen Lauf aufweist.

Weiterhin siebt die Erfindung für wenigstens eine der Pyramidenkanten zwischen ihrem Fußpunkt und der Spitze der Pyramide bzw. des Pyramidenstumpfs einen Verlauf vor , bei welchem die Pyramidenkante auf wenigstens einem Abschnitt bei gleich bleibender Steigung zu der Längsachse insbesondere gebogen und/oder insbesondere geknickt verläuft. Durch einen derartigen Verlauf der Pyramidenkante in einem gleich bleibenden Winkel zu der Längsachse des Gesteinsbohrwerkzeugs ist es zum Beispiel möglich, die Pyramidenkante als sichelförmig gebogene, innere Schneidkante auszubilden, welche sich in Draufsicht auf den Bohrerkopf bzw. in Richtung der Längsachse des Gesteinsbohrwerkzeugs betrachtet auf einer gebogenen Bahn der Spitze der Pyramide bzw. des Pyramidenstumpfs annähert.

Die Erfindung kann weiterhin für wenigstens eine der Pyramidenkanten zwischen ihrem Fußpunkt und der Spitze der Pyramide bzw. des Pyramidenstumpfs einen Verlauf vorsehen, bei welchem die Pyramidenkante der Pyramide auf wenigstens einem Abschnitt insbesondere mit zunehmender Steigung zu der Längsachse oder insbesondere mit abnehmender Steigung zu der Längsachse oder insbesondere mit sprunghafter Änderung der Steigung zu der Längsachse verläuft. Durch einen derartigen Verlauf der Pyramidenkante mit abnehmendem Winkel zu der Längsachse des Gesteinsbohrwerkzeugs oder mit zunehmendem Winkel zur Längsachse des Gesteinsbohrwerkzeugs oder mit sprunghaft zunehmendem oder abnehmendem Winkel zur Längsachse des Gesteinsbohrwerkzeugs ist es zum Beispiel möglich, bei zunehmendem Winkel eine buckelförmige, stabile Zentrierspitze oder bei abnehmendem Winkel eine spitze, sehr aggressive Zentrierspitze auszubilden.

Erfindungsgemäß kann auch eine Überlagerung der in den beiden vorhergehenden Abschnitten beschrieben Verläufe der Pyramidenkanten vorgesehen sein. Hierbei ist es insbesondere vorgesehen, wenigstens zwei, spiegelsymmetrisch zu der Längsmittelachse ausgebildete Pyramidenkanten gebogen und mit abnehmender Steigung zu der Längsachse auszubilden. Bei einem derartigen Verlauf der Pyramidenkanten entsteht eine stabile Spitze, welche als Schlagkuppe ausgebildet ist.

Schließlich kann die Erfindung auch vorsehen, die Mulde insbesondere durch zwei ebene Flächen auszubilden oder insbesondere durch mehrere ebene Flächen auszubilden. Mit derartigen, einfachen Geometrien lassen sich die erfindungsgemäßen Vorteile einfach und kostengünstig erreichen.

Erfindungsgemäß kann es auch vorgesehen sein, die Mulde zwischen benachbarten Pyramidenkanten knickfrei und gewölbt auszubilden. Bei derartig ausgebildeten Gesteinsbohrwerkzeugen lässt sich der Schneidkörper nach dem Gebrauch einfach reinigen, da der Schneidkörper frei von zurückspringenden Kanten ist. Durch die Möglichkeit einer raschen und erfolgreichen Reinigung des Schneidkörpers des Gesteinsbohrers wird dessen Nutzer zur Pflege und Überwachung des Gesteinsbohrers animiert. Hierdurch wird letztlich Unfällen vorgebeugt und hierdurch wird weiterhin eine gleich bleibende, hohe Qualität der Bohrungen sichergestellt.

Weiterhin sieht eine Weiterbildung der Erfindung vor, die äußeren Schneidkanten, welche außerhalb der Zentrierspitze durch das Zusammentreffen einer Spanfläche und einer Freifläche gebildet sind, in bogenförmig auszubilden und in Richtung der Längsachse betrachtet entgegen einer Drehrichtung des Bohrwerkzeugs durchzubiegen. Durch die schaufelförmig ausgebildete Schneidkante wird eine verbesserte Mitnahme des Bohrkleins um die Längsachse bzw. Drehachse des Gesteinsbohrwerkzeugs erreicht. Durch die verbesserte Mitnahme wird mehr Bohrklein den Abfuhrnuten zugeführt und somit wird die Menge des Bohrklein, welche sich zwischen der Bohrlochwand und dem Gesteinsbohrwerkzeug anhäuft und den Bohrvorgang beeinträchtigt, reduziert.

Vorzugsweise ist ein radial nach außen divergierender Verlauf von Teilflächen der Seitenflächen vorgesehen, wobei die Teilflächen jeweils die erste und die zweite äußere Schneidkante seitlich begrenzen. Hierdurch können die radial nach außen zunehmenden Schneidkräfte von dem Schneidkörper besser aufgenommen werden.

Die Erfindung kann auch vorsehen, wenigstens eine Höhenlinie der Zentrierspitze, welche eine Höhe in Richtung der Längsachse angibt, als Achteck auszubilden, bei welchem die zwischen den aufeinander folgenden Seitenkanten eingeschlossenen Innenwinkel abwechseln größer als 180° und kleiner als 180° sind. Eine derartige Geometrie führt zu einer Spitze die beim Schlagen durch ihr gegenüber einer vierseitigen Pyramide verringertes Volumen optimal in das Gestein bzw. den Beton eindringt und gleichzeitig durch ihre gegenüber einer vierseitigen Pyramide schärferen Pyramidenkanten eine gute Schneid- und Abschälleitung aufweist.

Schließlich sieht eine Weiterbildung der Erfindung vor, einen Durchmesser der Zentrierspitze proportional zu dem Nenndurchmesser des Bohrers zu bemessen und den Durchmesser der Zentrierspitze insbesondere zwischen 1/6 und 3/6 des Nenndurchmessers auszuführen und vorzugsweise mit etwa 1/3 des Nenndurchmessers auszuführen. Eine derartig massive Ausführung der Zentrierspitze führt zu einer hohen Stabilität und weist durch die spezielle Gestaltung dennoch eine hohe Abtragsleistung auf.

Nach Maßgabe einer Ausführungsform der Erfindung werden unter einem Schneidkörper sowohl Schneidplatten verstanden, welche zwischen Fortsätzen der Wendel eingebettet sind und mit diesen den Bohrerkopf bilden, als auch Vollhartmetallköpfe verstanden, welche stumpf auf der Wendel befestigt sind und den vollständigen Bohrerkopf bilden. Isoliert eingesetzte Zentrierspitzen sind im Sinne der Erfindung keine Schneidkörper.

Im Sinne der Erfindung ist eine Mulde eine konkave Fläche, welche zwischen zwei Pyramidenkanten der Zentrierspitze verläuft, wobei die Zentrierspitze als Pyramide oder Pyramidenstumpf ausgebildet ist.

Weitere Einzelheiten der Erfindung werden in der Zeichnung anhand von schematisch dargestellten Ausführungsbeispielen beschrieben. Hierbei zeigen:
- Figur 1a bis 1 p:: ein erfindungsgemäßes Gesteinsbohrwerkzeug und dessen Scheidkörper in unterschiedlichen Ansichten und Schnitten;
- Figur 2a bis 2k:: einen als Schneidplatte ausgebildeten Schneidkörper für ein zweites erfindungsgemäßes Gesteinsbohrwerkzeug;
- Figur 3a bis 10e:: acht weitere Ausführungsvarianten eines als Schneidplatte oder als Vollhartmetallkopf ausgebildeten Schneidkörpers für erfindungsgemäße Gesteinsbohrwerkzeuge; und
- Figur 11 a bis 11f:: weitere Ansichten und Schnitte des in den Figuren 1a bis 1 p gezeigten Schneidkörpers und
- Figur 12 bis 14:: Draufsichten auf zwei weitere, schematisch dargestellte Gesteinsbohrwerkzeuge.

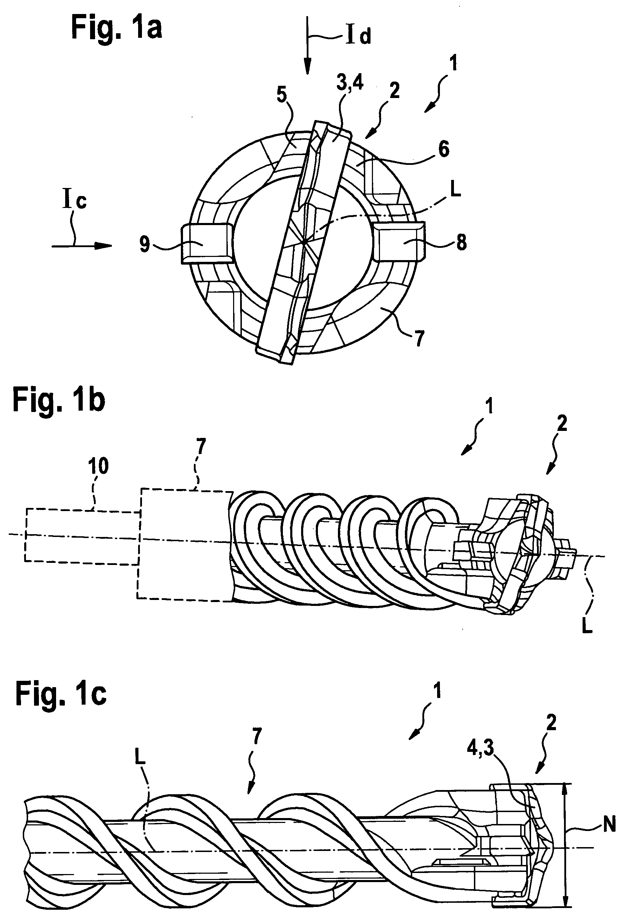

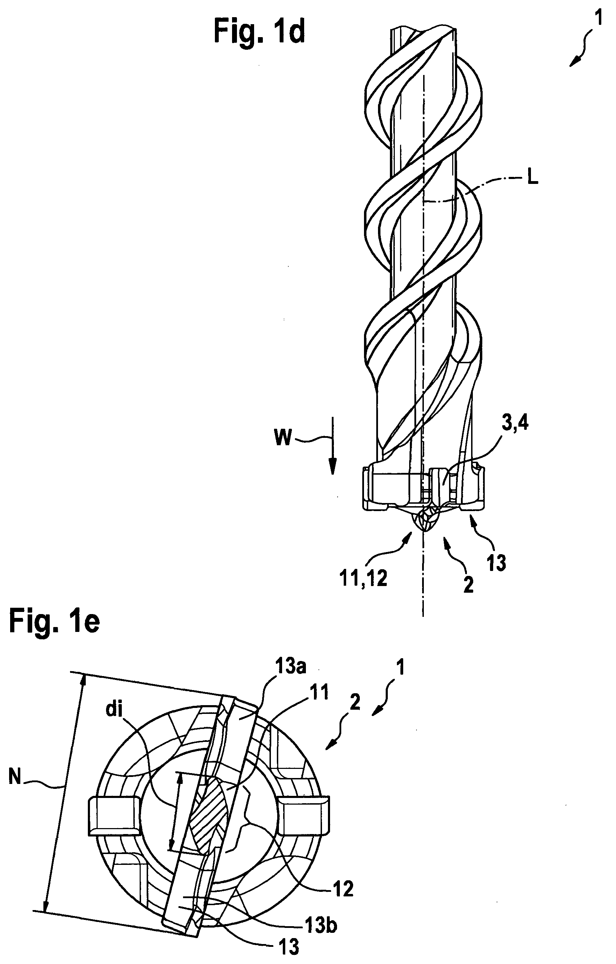

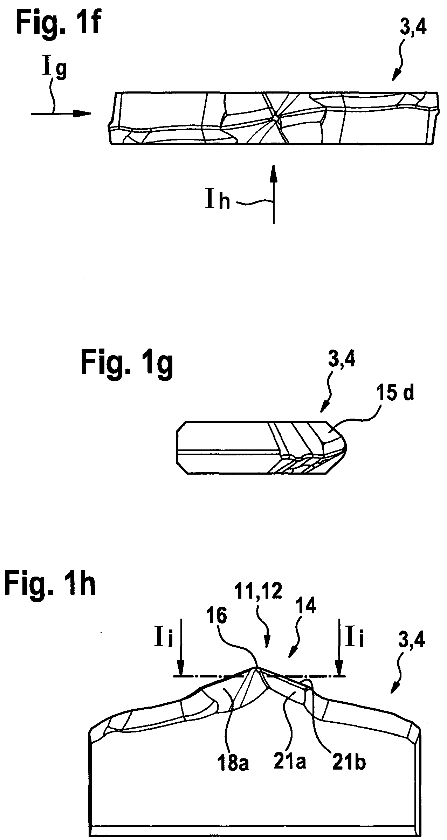

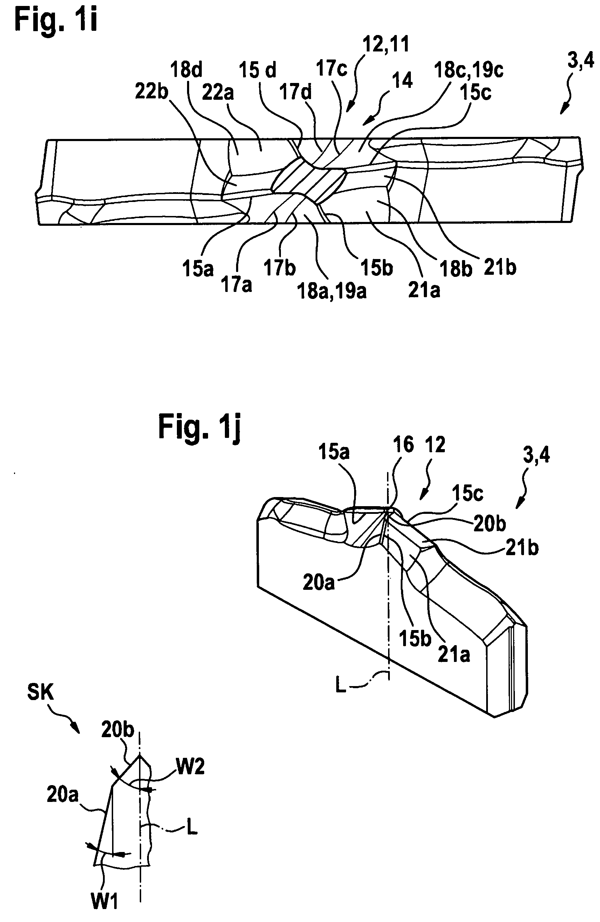

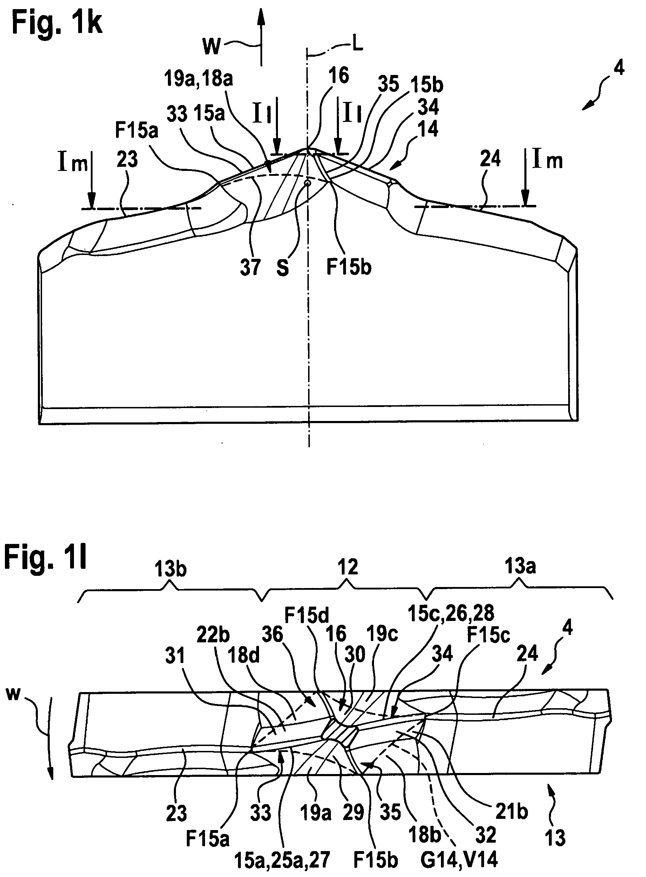

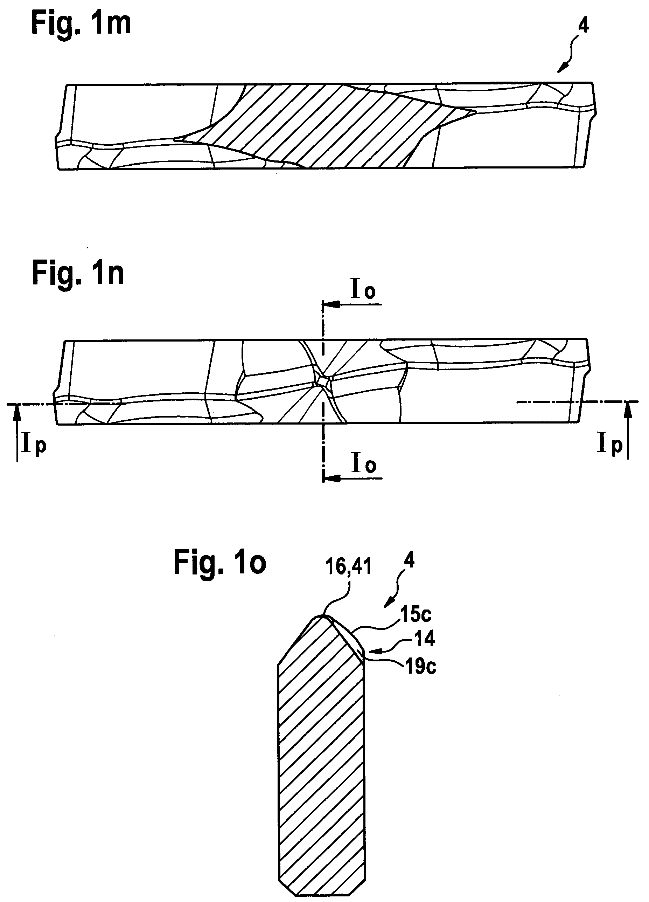

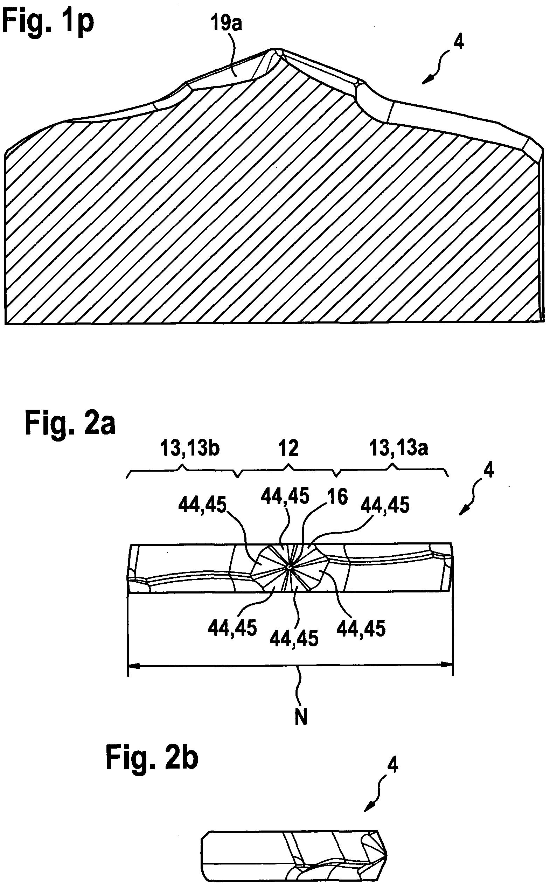

In der Figur 1 a ist in Draufsicht in Richtung einer Längsachse L ein erfindungsgemäßes Gesteinsbohrwerkzeug 1 gezeigt. Ein Bohrerkopf 2 des Gesteinsbohrwerkzeugs 1 umfasst einen Schneidkörper 3, welcher als Schneidplatte 4 ausgebildet ist. Die Schneidplatte 4 ist zwischen Fortsätzen 5, 6 einer Wendel 7 gehalten. In die Fortsätze 5, 6, welche Bestandteile des Bohrerkopfs 2 sind, sind weiterhin zwei Pilotschneidkörper 8, 9 eingebettet.

In der Figur 1b ist das in der Figur 1 a gezeigte Gesteinsbohrwerkzeug 1 in perspektivischer Ansicht dargestellt. Mit gestrichelten Linien sind der weitere Verlauf der Wendel 7 und ein an die Wendel anschließender Schaft 10 gezeigt.

In der Figur 1c ist eine Seitenansicht auf das Gesteinsbohrwerkzeug 1 aus der in der Figur 1 a angedeuteten Pfeilrichtung Ic dargestellt. In dieser Ansicht ist erkennbar, wie sich die Schneidplatte 4 über einen quer zu der Längsachse L verlaufenden Nenndurchmesser N des Gesteinsbohrwerkzeugs 1 erstreckt.

In der Figur 1d ist eine weitere Seitenansicht auf das Gesteinsbohrwerkzeug 1 gezeigt, wie sich diese ergibt, wenn die Darstellung der Figur 1a aus einer Pfeilrichtung Id betrachtet wird. In der Figur 1d ist erkennbar, wie eine Zentrierspitze 11, welche in einem Innenbereich 12 des Schneidkörpers 3 bzw. der Schneidplatte 4 angeordnet ist, in eine Wirkrichtung W des Gesteinsbohrwerkzeugs 1 über einen Außenbereich 13 des Schneidkörpers 3 bzw. der Schneidplatte 4 hervorragt. Zum besseren Verständnis wird hier auch auf die Figur 1e verwiesen, welche das Gesteinsbohrwerkzeug 1 entsprechend der Darstellung der Figur 1 a zeigt, wobei jedoch die Zentrierspitze 11 abgeschnitten dargestellt ist. Der Innenbereich 12 erstreckt sich über einen Durchmesser di, welcher maximal 40 % des Nenndurchmessers N beträgt. Der Außenbereich 13 setzt sich aus zwei Teilbereichen 13a und 13b zusammen, welche in Richtung des Verlaufs des Nenndurchmessers N an den Innenbereich 12 angrenzen.

In der Figur 1f ist nun der Schneidkörper 3 bzw. die Schneidplatte 4 in Alleinstellung ohne die Fortsätze, die Pilotschneidkörper, die Wendel und den Schaft in Draufsicht dargestellt. Die Darstellungen 1g und 1h zeigen Seitenansichten der Schneidplatte 4 aus den in der Figur 1f angedeuteten Pfeilrichtungen Ig und Ih. Die Figur 1i zeigt einen Schnitt durch die Figur 1h entsprechend der Schnittlinie Ii-Ii. Die Figur 1j zeigt die Schneidplatte 4 in perspektivischer Ansicht. Insbesondere aus der Zusammenschau der Figuren 1h, 1i und 1j ergibt sich, dass die den Innenbereich 12 bildende Zentrierspitze 11 als Pyramide 14 ausgebildet ist, welche vier Pyramidenkanten 15a bis 15d aufweist, welche in einer Spitze 16 der Pyramide 14 zusammenlaufen. Zwischen den Pyramidenkanten 15a und 15b bzw. 15c und 15d sind Hilfslinien 17a bis 17d erkennbar, welche in Bezug auf die Spitze 16 der Pyramide 14 einen strahlenähnlichen Verlauf aufweisen. Durch diese Hilfslinien 17a bis 17d wird in vereinfachter Weise eine konkav gewölbte Formgebung von Seitenflächen 18a und 18d, welche zwischen den Pyramidenkanten 15a und 15b bzw. 15c und 15d liegen, angedeutet. Die Seitenflächen 18a, 18c sind somit als Mulden 19a, 19c ausgebildet. Wie aus einer Zusammenschau der Figuren 1h, 1i, 1j und 1g hervorgeht, weisen die Pyramidenkanten 15b und 15d einen geknickten Verlauf auf. Ein erster, unterer Abschnitt 20a der Pyramidenkante 15b weist zu der Längsachse L einen ersten Winkel W1 auf. Ein zweiter Abschnitt 20b der Pyramidenkante 15b weist zu der Längsachse L einen zweiten Winkel W2 auf. Der erste Winkel W1 ist kleiner als der zweite Winkel W2. Dies ist in einer schematischen Skizze SK zur Figur 1j dargestellt. Somit verläuft die Pyramidenkante 15b in ihrem oberen Abschnitt 20b flacher als in ihrem unteren Abschnitt 20a. Die Pyramidenkante 15d verläuft in Bezug auf die Längsachse L spiegelbildlich zur der Pyramidenkante 15b und weist einen entsprechenden Verlauf auf. Dieser abknickende Verlauf der Pyramidenkante 15b ist darin bedingt, dass Seitenflächen 18b und 18d, welche zwischen den Pyramidenkanten 15d und 15c bzw. 15d und 15a liegen, jeweils durch zwei unterschiedlich orientierte Teilflächen 21a, 21b bzw. 22a, 22b zusammengesetzt sind.

Die Beschreibung wird anhand der Figuren 1k und 1l fortgesetzt, wobei die Figur 1k eine vergrößerte Darstellung der Figur 1h ist, in welche weitere Schnittverläufe eingezeichnet sind und wobei die Figur 1l einen Schnitt durch die Figur 1k entsprechend der Schnittlinie IL-IL zeigt. Wie in der Figur 1l erkennbar ist, werden äußere Schneidkanten 23, 24 des Schneidkörpers 4, die über Teilbereiche 13a, 13b des Außenbereichs 13 in Richtung des Innenbereichs 12 verlaufen, ununterbrochen durch die Pyramidenkanten 15a und 15c zu einer in der Figur 1l abgeschnitten dargestellten Spitze 16 hin fortgesetzt. Hierbei bilden die Pyramidenkanten 15a und 15c innere Schneidkanten 25, 26, welche die Funktion von Hauptschneiden 27, 28 aufweisen. Die in eine Drehrichtung w der Schneidplatte 4 vor den inneren Schneidkanten 25, 26 liegenden Mulden 19a und 19c bilden sogenannte Spanflächenmulden 29, 30, durch deren Form die inneren Schneidkanten 25, 26 mit einen kleinen negativen Spanwinkel erhalten, welcher zwischen 10° und 45° und vorzugsweise bei etwa 30° liegt. Freiflächen 31, 32 der inneren Schneidkanten 25, 26 werden durch die Teilflächen 21 b und 22b der Seitenflächen 18b und 18d gebildet. Somit sind im Bereich der Pyramidenkanten 15a und 15c Keile 33, 34 gebildet, wobei der Keil 33 durch die Mulde 19a und die Teilfläche 22b gebildet wird, welche in der Pyramidenkante 15a zusammentreffen und wobei der Keil 34 durch die Mulde 19c und die Teilfläche 21 b gebildet wird, welche in der Pyramidenkante 15c zusammentreffen. Entsprechend des oben beschriebenen Verlaufs der Mulden 19a und 19c weisen die Keile 33 und 34 Keilwinkel auf, welche im Vergleich mit Keilwinkeln einer Pyramide, bei welcher die Seitenflächen als ebene Flächen ausgebildet sind, um wenigstens 30% verkleinert sind. Im Bereich der Pyramidenkanten 15b und 15d werden weitere Keile 35 und 36 gebildet, deren Form durch die Mulde 19a und die Seitenfläche 18b bzw. durch die Mulde 19c und die Seitenfläche 18d, welche an den Pyramidenkanten 15b und 15d zusammenlaufen, bestimmt wird. Diese Keile 35, 36, welche - wie aus der Figur 1k hervorgeht - entgegen der Wirkrichtung W gegenüber den Keilen 33 und 34 zurückgesetzt sind, weisen insbesondere bei der Schlagbewegung des Gesteinsbohrwerkzeugs ihre Zerstörungswirkung auf. In der Figur 1k ist weiterhin erkennbar wie die Mulde 19a in Richtung eines Schwerpunkts S der Pyramide 14 konkav gewölbt ist. Mit einer gestreichelten Linie ist eine Grundseite 37 der Pyramide 14 eingezeichnet, welche von einem Fußpunkt F15a der Pyramidenkante 15a zu einem Fußpunkt 15b der Pyramidenkante 15b verläuft. In Folge der muldenartigen Ausbildung der Seitenfläche 18a weist die Grundseite 37 einen gebogenen Verlauf auf. Entsprechend ist eine Grundfläche G14 der Pyramide 14 - wie diese in der Figur 1l schematisch mit gestrichelten Linien eingezeichnet ist - als Viereck V14 zwischen den Fußpunkten F15a, F15b, F15c und F15d der Pyramidenkanten 15a bis 15d ausgebildet, wobei die Grundseiten 37 bis 40 entsprechend der Wölbung der Seitenflächen 18a bis 18d gebogen verlaufen.

In der Figur 1m ist die Schneidplatte 4 entsprechend dem in der Figur 1k gezeigten Schnittverlauf 1 m-1 m dargestellt. Die Schnittlinie 1 m-1 m verläuft unterhalb der Zentrierspitze 14.

Die Figur 1n zeigt eine vergrößerte Darstellung der Figur 1f, in welche die Schnittverläufe Io-Io und Ip-Ip der in den Figuren 1o und 1p gezeigten Schnittdarstellungen der Schneidplatte 4 angedeutet sind.

In der Figur 1o ist die Mulde 19c erkennbar, welche zu der Pyramidenkante 15c hin ansteigt. Weiterhin ist im Schnitt erkennbar, dass die Spitze 16 der Pyramide 14 als Kuppe 41 ausgebildet ist, um den Schlagbelastungen besser Stand halten zu können.

Aus der Schnittdarstellung 1 p ist nochmals die gewölbte Formgebung der Mulde 19a erkennbar.

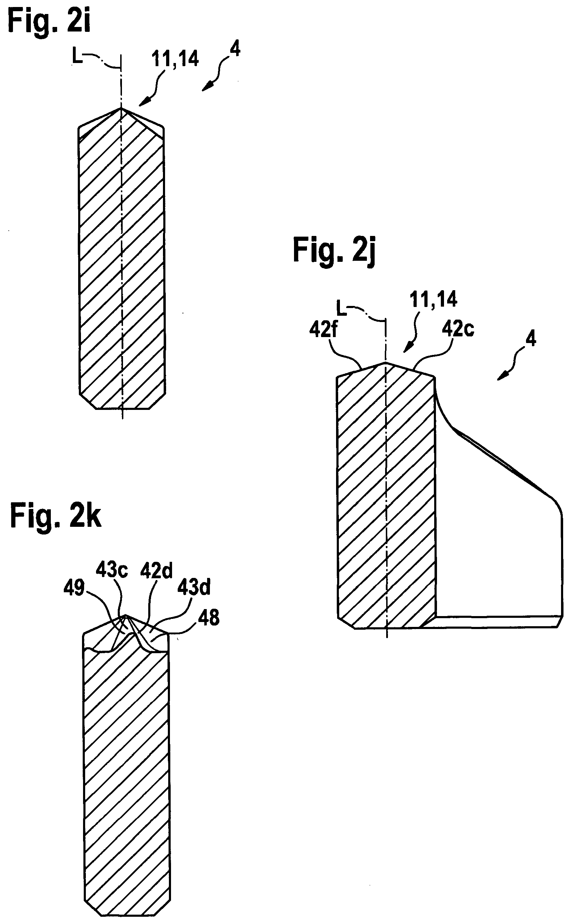

Die Figuren 2a bis 2k zeigen einen weiteren Scheidkörper 3, welcher als Schneidplatte 4 für ein zweites erfindungsgemäßes Gesteinsbohrwerkzeug ausgebildet ist. Die Schneidplatte 4 ist in einen Innenbereich 12 und einen Außenbereich 13 gegliedert, wobei der Innenbereich 12 durch eine Zentrierspitze 11 definiert wird, an welche sich der Außenbereich 13 mit seinen Teilbereichen 13a und 13b anschließt. Die Schneidplatte 4 erstreckt sich über einen Nenndurchmesser N, ein Durchmesser di des Innenbereichs 12 beträgt maximal 40% des Nenndurchmessers N.

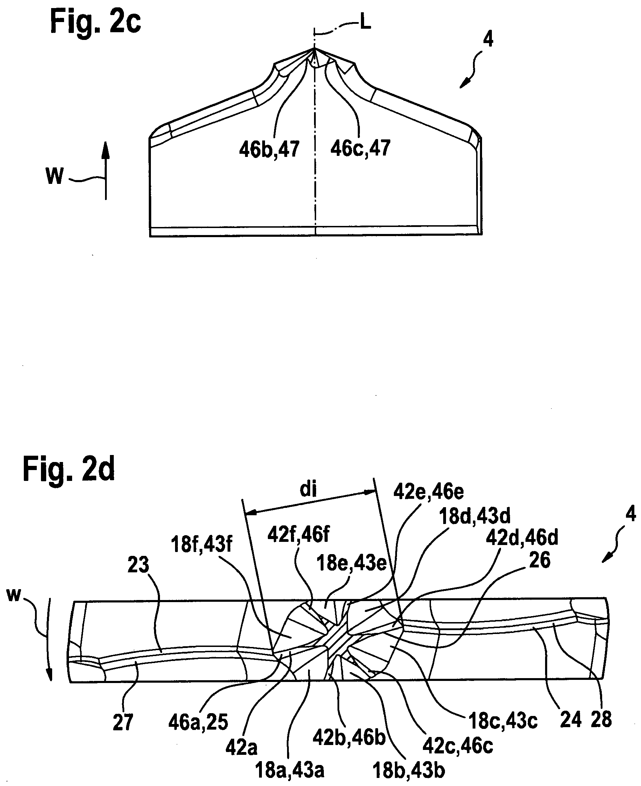

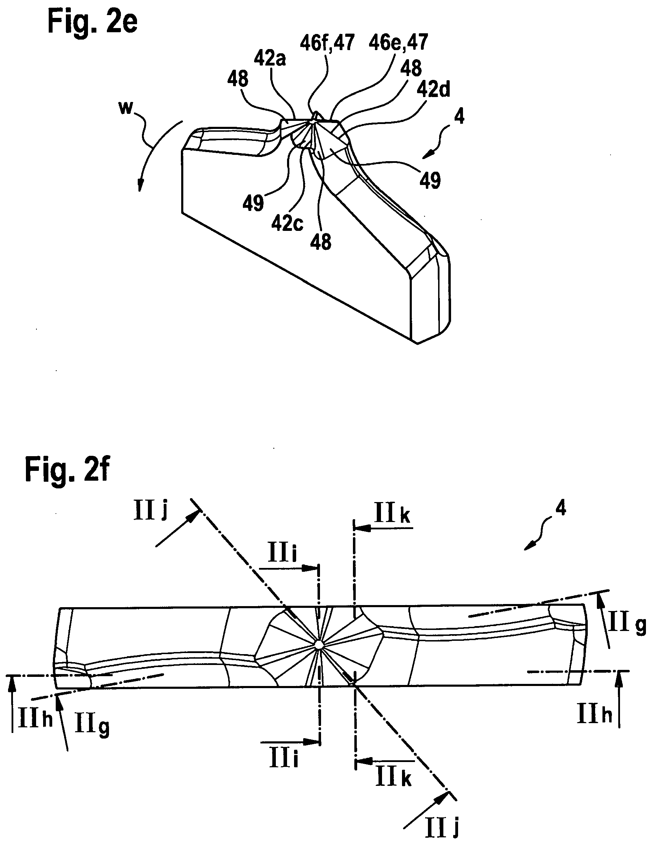

In der Figur 2a ist eine Draufsicht auf die Schneidplatte 4 gezeigt. Die Figuren 2b und 2c zeigen Seitenansichten auf die Schneidplatte 4 aus den in der Figur 2a angedeuteten Pfeilrichtungen IIb und IIc. Die Figur 2d zeigt eine Draufsicht auf die Schneidplatte 4 bei geschnitten dargestellter Zentrierspitze 11. Die Figur 2e zeigt eine perspektivische Ansicht der Schneidplatte 4.

Wie insbesondere aus der Figur 2d hervorgeht ist die Zentrierspitze 11 als Pyramide 14 ausgebildet, welche sechs Pyramidenkanten 42a bis 42f aufweist, welche sich von Fußpunkten F42a bis F42f zu einer Spitze 16 - siehe Figur 2a - der Pyramide 14 erstrecken. Alle Seitenflächen 18a bis 18f zwischen den Pyramidenkanten sind als Mulden 43a bis 43f ausgebildet. Eine konkave Wölbung aller Mulden 43a bis 43f zu einer Längsmittelachse L der Schneidplatte 4 bzw. des Gesteinsbohrwerkzeugs hin ist aus den in der Figur 2d sichtbaren Schnittkanten ablesbar. In Drehrichtung w betrachtet bildet jede Mulde 43a bis 43f für die nachfolgende Pyramidenkante eine Spanflächenmulde 44 und für die vorangehende Pyramidenkante eine Freiflächenmulde 45. Im Bereich der Pyramidenkanten 18a bis 18f weist die Pyramide 14 somit sechse Keile 46a bis 46f auf, die jeweils durch Flächenabschnitte der Mulden 43a bis 43f gebildet werden, welche in der jeweiligen Pyramidenkante 18a bis 18f zusammentreffen. Die Keile 46a und 46d bilden als innere Schneidkanten 25, 26 eine nahtlose Fortsetzung von äußeren Schneidkanten 23 und 24. Zwei Hauptscheiden 27, 28, welche sich über die Schneidplatte 4 erstrecken sind somit durch die äußeren Schneiden 23 und 24 sowie die inneren Schneiden 25 und 26 gebildet. Die Zentrierspitze 11 bzw. die Pyramide 14 überragt den Außenbereich 13 der Schneidplatte 14 in Wirkrichtung W. Insbesondere aus den Figuren 2c und 2f ist erkennbar wie die Keile 46b, 46c, 46e und 46f zentrisch angeordnete Nebenschneiden 47 bilden. Durch die Ausbildung der Seitenflächen 18a bis 18f ist in der Drehrichtung w der Schneidplatte 4 vor jeder Pyramidenkante 42a bis 42f eine Spanfläche 48 und hinter jeder Pyramidenkante 42a bis 42f eine Freifläche 49 gebildet. In der Figur 2e sind einige Spanflächen 48 und einige der Freiflächen 49 exemplarisch bezeichnet.

In der Figur 2f ist eine Draufsicht auf die Schneidplatte 4 gezeigt, welche der Darstellung der Figur 2a entspricht. In diese Draufsicht sind die Schnittverläufe IIg-IIg, IIh-IIh, IIi-IIi, IIj-IIj und IIk-IIk für die Schnittfiguren 2g, 2h, 2i, 2j und 2k eingezeichnet.

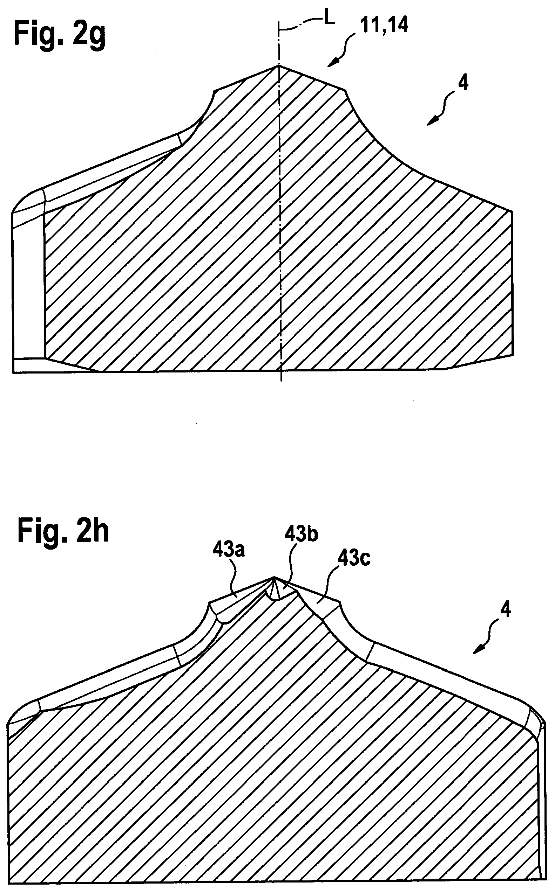

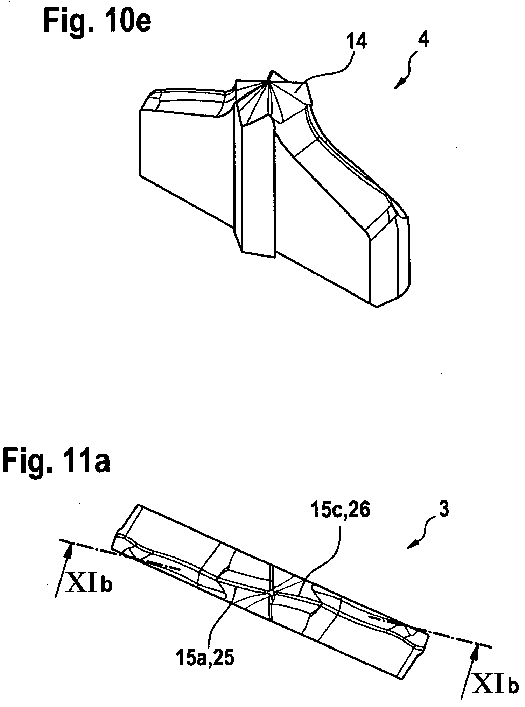

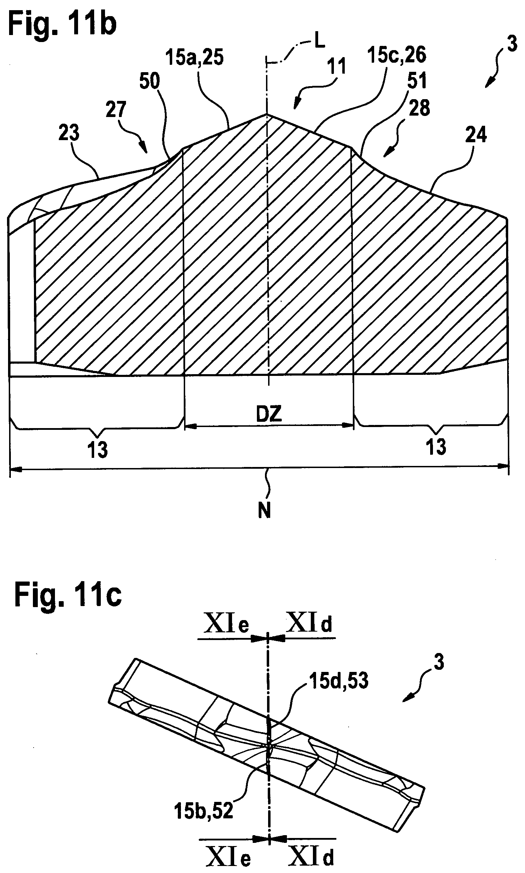

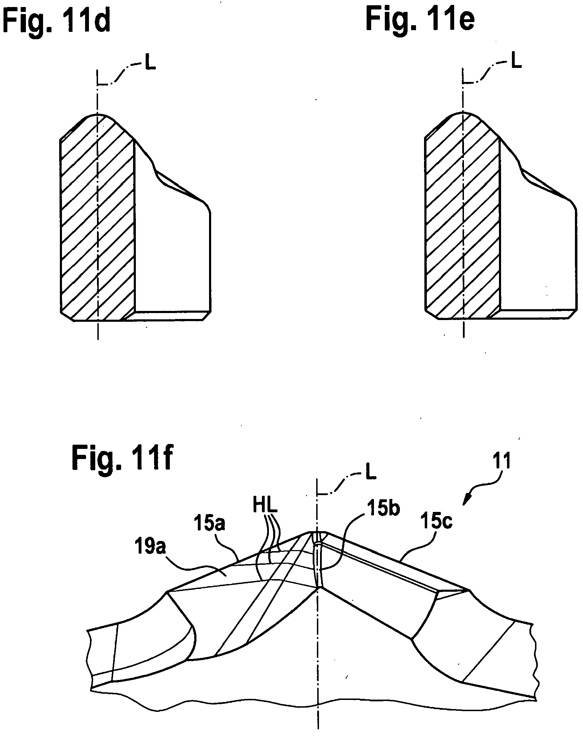

In der Figur 2g ist die symmetrische Ausbildung der Zentrierspitze 11 bzw. der Pyramide 14 zu der Längsachse L erkennbar. In der Figur 2h ist sind die Mulden 43a, 43b und 43c mit ihrer konkav gewölbten Form erkennbar. Die Figur 2i zeigt wie die Figur 2g die symmetrische Ausbildung der Zentrierspitze 11 bzw. der Pyramide 14. Aus der Figur 11 ist die symmetrische Ausbildung der Pyramidenkanten 42c und 42f in Bezug auf die Längsachse L ersichtlich. Die Figur 2k zeigt schließlich einen Schnitt, aus welchem ersichtlich ist wie die Mulden 43c und 43d zu der Pyramidenkante 42d hin ansteigen und eine Freifläche 49 und eine Spanfläche 48 bilden.

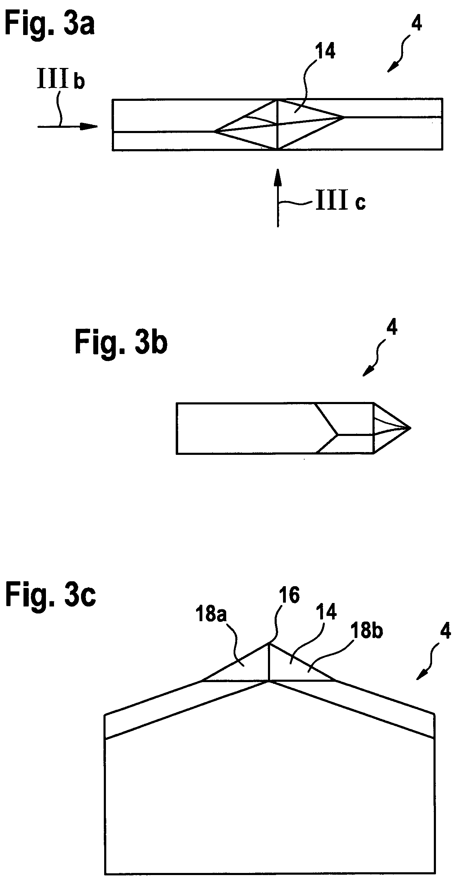

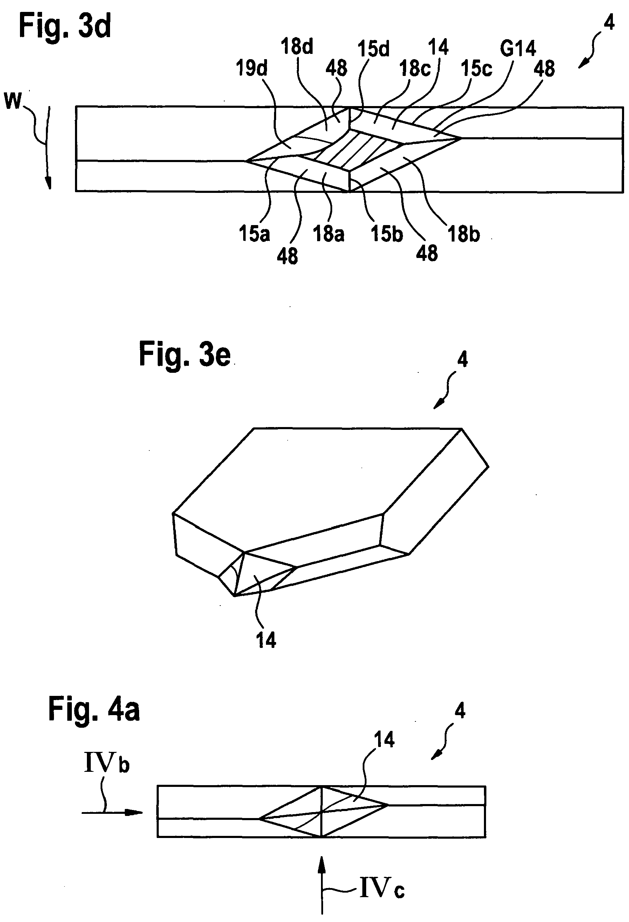

Für die in den Figuren 3a bis 10e dargestellten acht weiteren Ausführungsvarianten von Schneidplatte 4 für Gesteinsbohrwerkzeuge gilt grundsätzlich, dass die mit a bezeichnete Figur jeweils eine Draufsicht auf die Schneidplatte darstellt, dass die mit b und c bezeichneten Figuren jeweils Seitenansichten der gezeigten Schneidplatte darstellen, dass die mit d bezeichnete Figur jeweils eine Draufsicht der Schneidplatte bei geschnittener Spitze zeigt und dass die mit e bezeichnete Figur jeweils eine perspektivische Ansicht der jeweiligen Figur zeigt. Weiterhin gilt für alle acht Ausführungsbeispiele, dass in einem Innenbereich 12 eine als Pyramide 14 ausgebildet Zentrierspitze 14 angeordnet ist und sich an den Innenbereich 12 ein Außenbereich 13 anschließt, welcher aus zwei Teilbereichen 13a und 13b besteht.

Bei den in den Figuren 3a bis 6e gezeigten Schneidplatten 4 weisen die Pyramiden 14 jeweils eine viereckige Grundfläche G14 und entsprechend vier Pyramidenkanten 15a bis 15d auf, welche zu einer Spitze 16 der Pyramide laufen. Die Pyramidenkanten 15a bis 15d sind durch vier Seitenflächen 18a bis 18d verbunden.

Bei der in den Figuren 3a bis 3e gezeigten Schneidplatte 4 ist die Seitenfläche 18d als Mulde 19d ausgebildet. Hierdurch wird an die Pyramidenkante 15d eine verschärfte Spanfläche 48 angeformt, welche einen betragsmäßig kleineren negativen Spanwinkel aufweist als die durch die ebenen Seitenflächen 18a, 18b und 18c gebildeten weiteren Spanflächen 48.

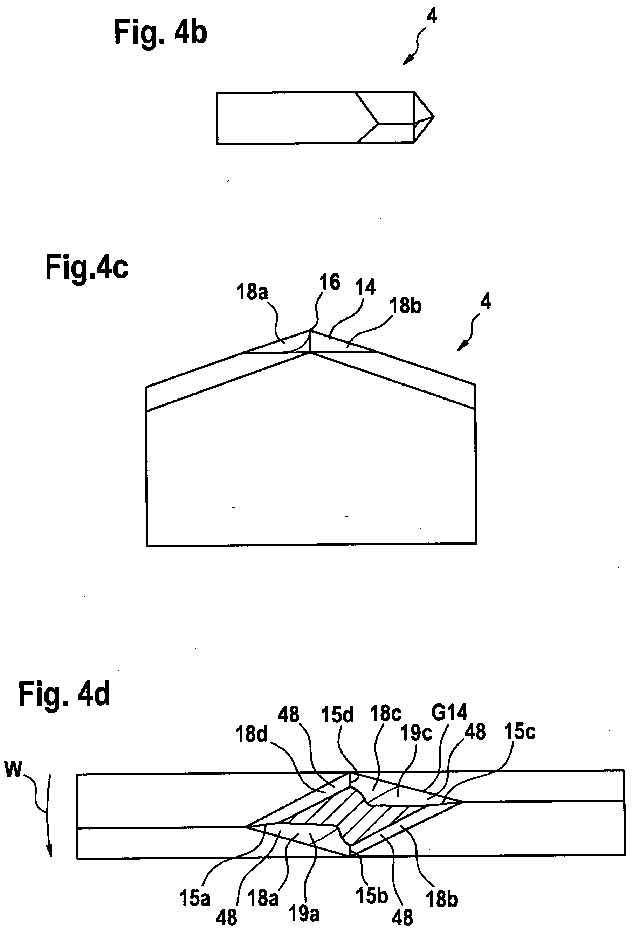

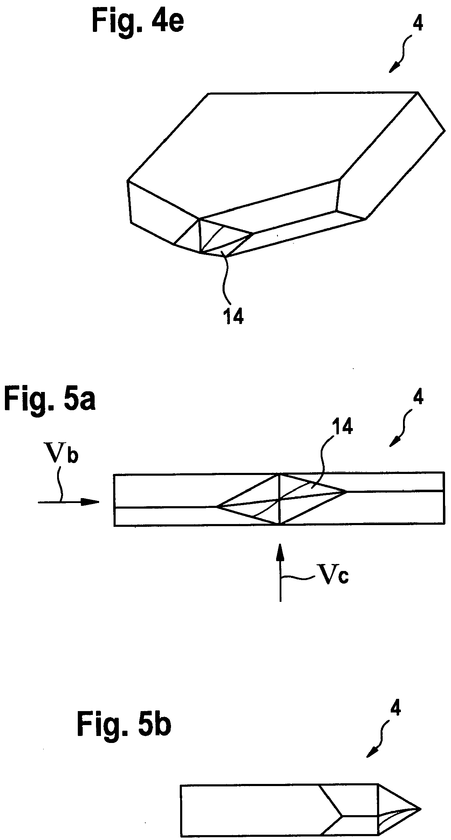

Bei der in den Figuren 4a bis 4e gezeigten Schneidplatte 4 sind die Seitenflächen 18a und 18c als Mulden 19a und 19c ausgebildet. Hierdurch wird an die Pyramidenkanten 15a und 15c eine verschärfte Spanfläche 48 angeformt, welche einen betragsmäßig kleineren negativen Spanwinkel aufweist als die durch die ebenen Seitenflächen 18b und 18d gebildeten weiteren Spanflächen 48.

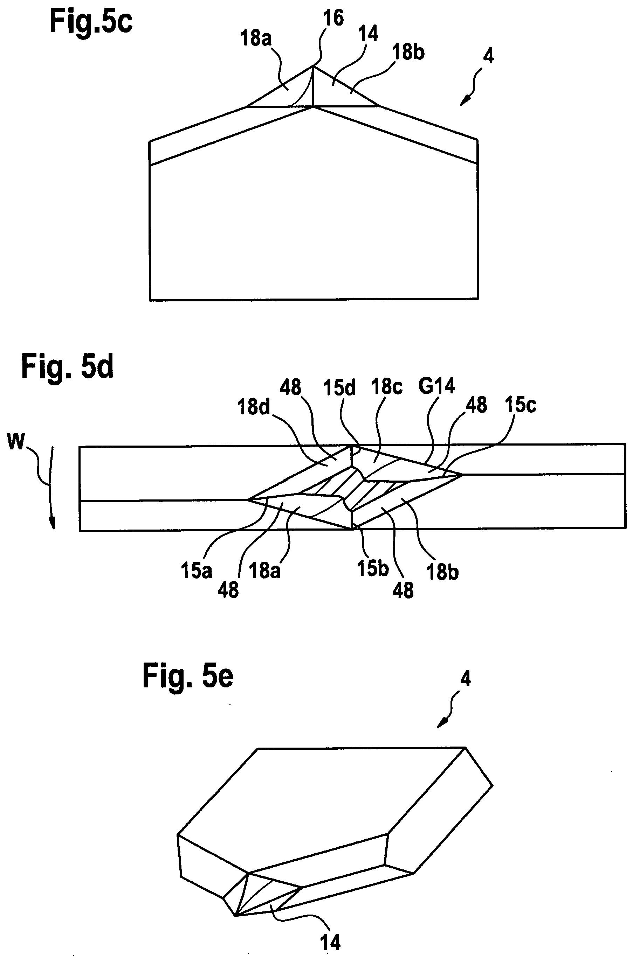

Auf die in den Figuren 5a bis 5e gezeigte Schneidplatte 4 trifft die Beschreibung zu den Figuren 4a bis 4e zu, wobei die Zentrierspitze 11 bei der Ausführungsvariante der Figuren 4a bis 4e vollständig in die Schneidplatte 4 integriert ist und bei der Ausführungsvariante der Figuren 5a bis 5e in eine Wirkrichtung W hervorsteht.

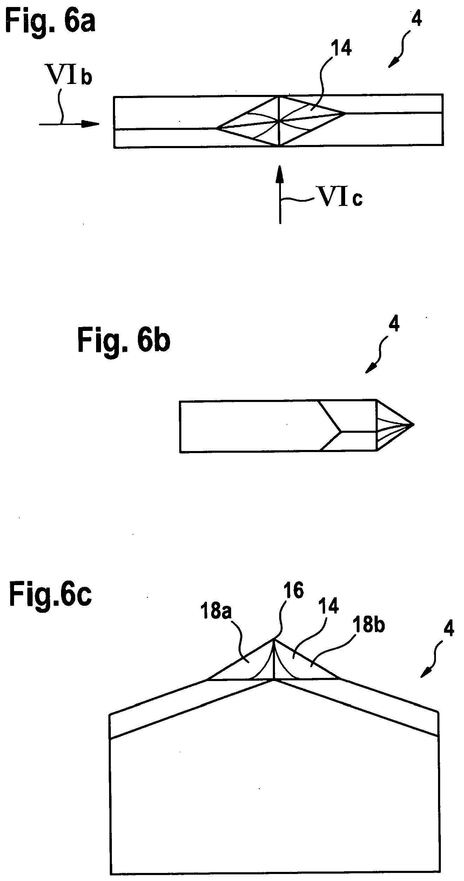

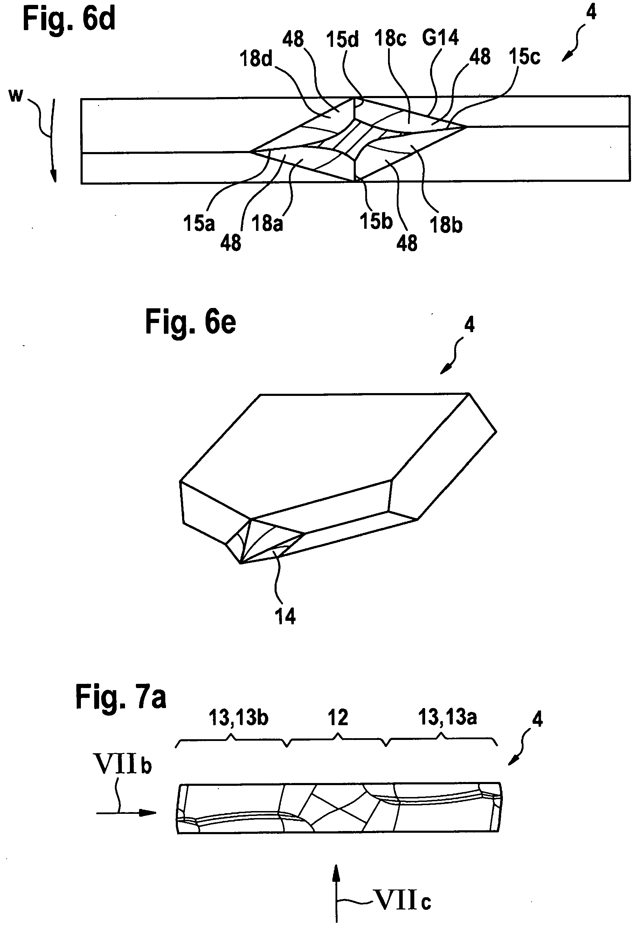

Bei der in den Figuren 6a bis 6e gezeigten Schneidplatte 4 sind die Seitenflächen 18a bis 18d als Mulde 19a bis 19d ausgebildet. Hierdurch wird an alle Pyramidenkanten 15a bis 15d eine verschärfte Spanfläche 48 angeformt, welche einen betragsmäßig kleineren negativen Spanwinkel aufweist als durch - hier nicht vorhandene - ebenen Seitenflächen gebildete Spanflächen.

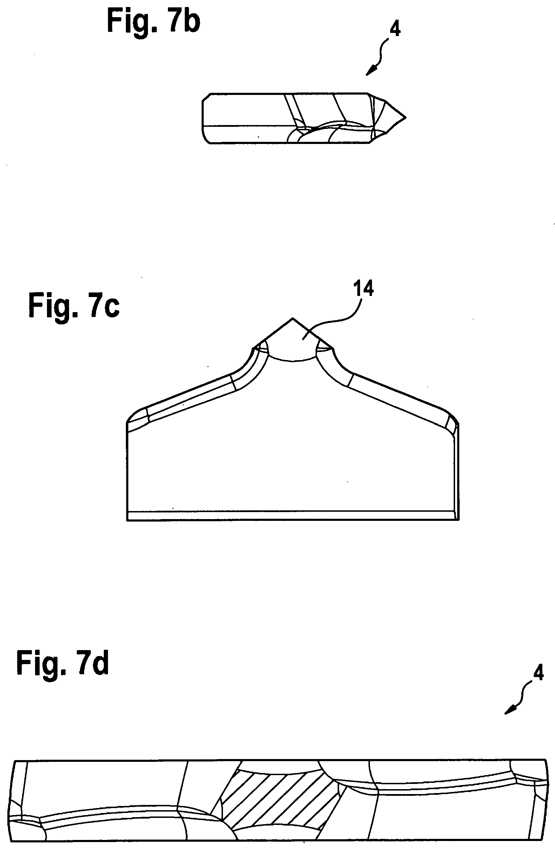

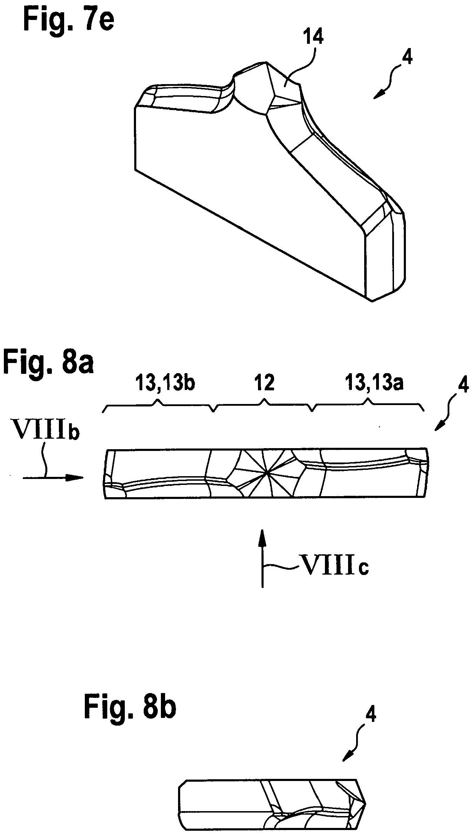

Bei der in den Figuren 7a bis 7e gezeigten Schneidplatte 4 handelt es ich um eine Ausführungsvariante, welche der ersten, in den Figuren 1 a ff. gezeigten Ausführungsvariante ähnlich ist.

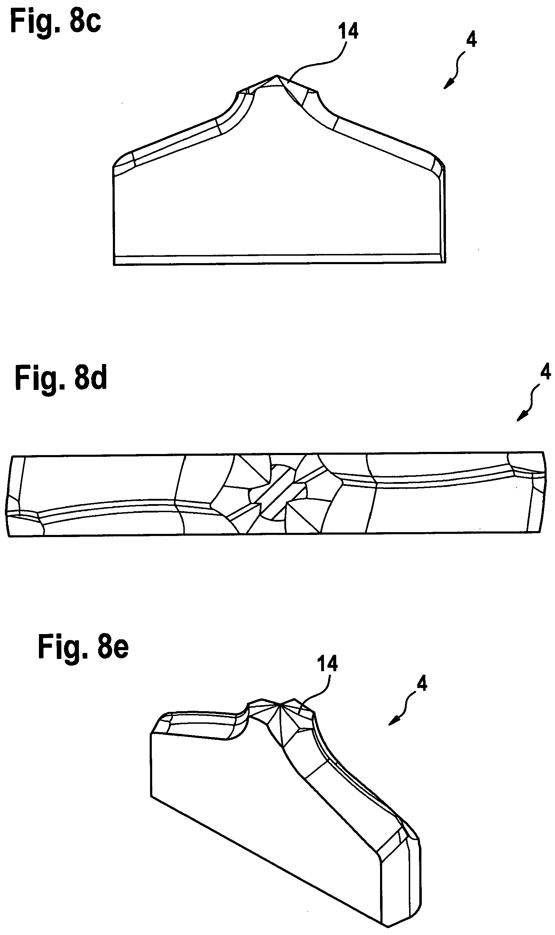

Bei der in den Figuren 8a bis 8e gezeigten Schneidplatte 4 handelt es ich um eine Ausführungsvariante, welche der zweiten, in den Figuren 2a ff. gezeigten Ausführungsvariante ähnlich ist.

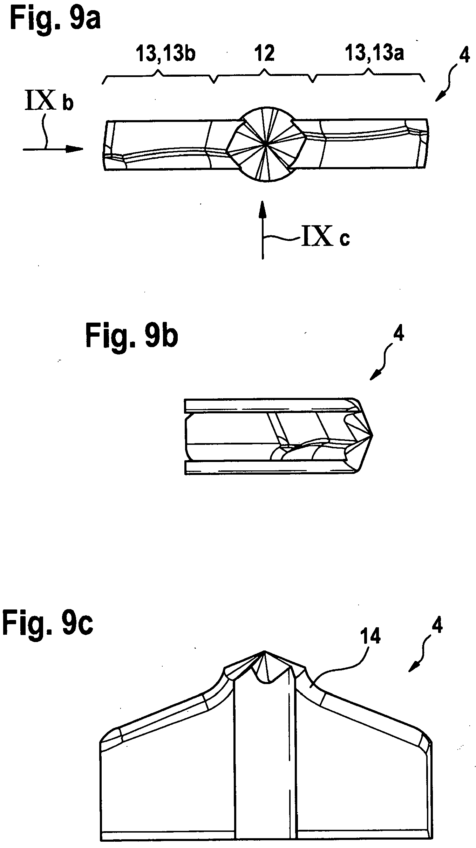

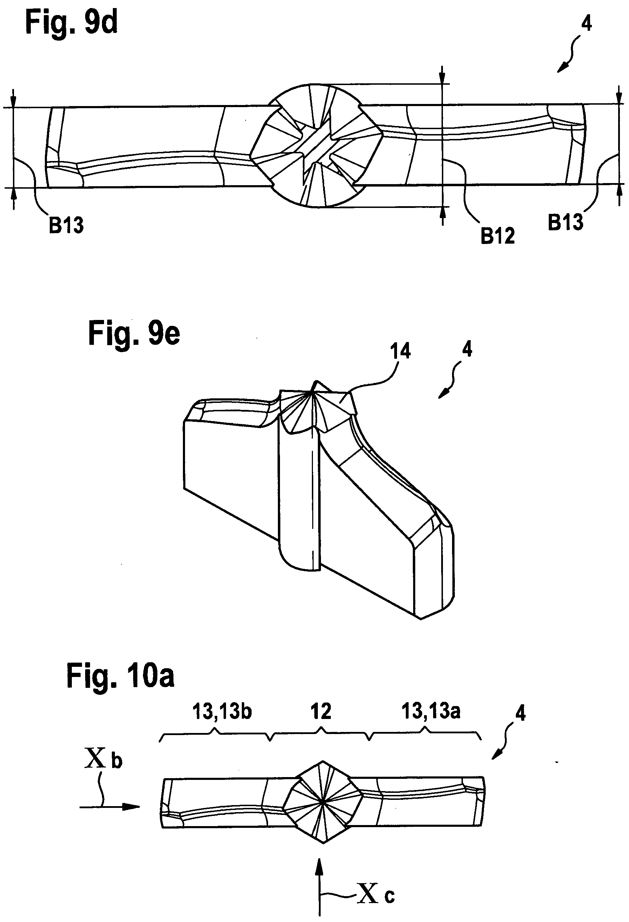

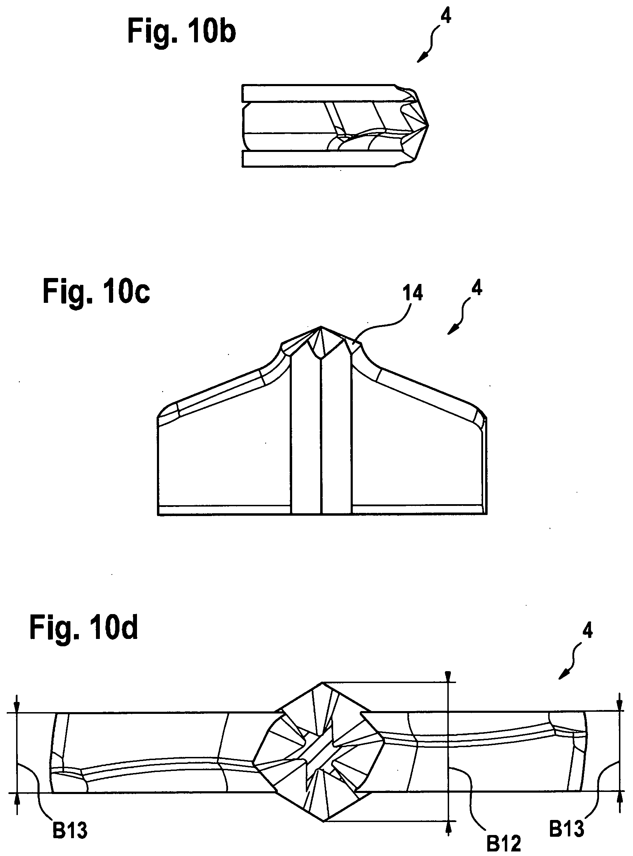

Die in den Figuren 9a bis 9e und 10a bis 10e gezeigten Ausführungsvarianten unterscheiden sind gegenüber den vorhergehend beschriebenen Ausführungsvarianten insbesondere dadurch, dass deren Scheidkörper 4 in dem Innenbereich 12 eine Breite B12 aufweisen, welche größer ist als eine Breite B13, welche der Außenbereich 13 des Schneidkörpers 4 aufweist.

In den Figuren 11a bis 11f sind weitere Ansichten und Schnitte des in den Figuren 1a bis 1p gezeigten Schneidkörpers 3 dargestellt. Die Figur 11 a zeigt eine Seitenansicht auf den Schneidköper 3, in welcher der Verlauf eines in der Figur 11b gezeigten Schnitts durch den Schneidkörper 3 eingezeichnet ist. Der Schnitt Xlb-Xlb verläuft durch die Pyramidenkanten 15a und 15c, welche als innere Schneidkanten 25, 26 einen Abschnitt der Hauptschneiden 27 und 28 bilden. Im Schnittbild der Figur 11b ist erkennbar wie die Pyramidenkanten 15a und 15c symmetrisch zu der Längsachse L des Schneidkörpers 3 verlaufen und über Absätze 50, 51 in die äußeren Schneidkanten 23, 24 des Außenbereichs 13 übergehen. Weiterhin ist in der Figur 11 b nochmals der Nenndurchmesser N der Schneidplatte 3 bezeichnet. Ein Durchmesser DZ der Zentrierspitze 11 beträgt etwa 1/6 bis 3/6 des Nenndurchmesser N und ist bei dem dargestellten Ausführungsbeispiel mit etwa 1/3 des Nenndurchmessers N bemessen. In der Figur 11c sind zwei Schnittverläufe dargestellt, welche den Schneidkörper 3 entlang der Pyramidenkanten 15b und 15d schneiden, welche Nebenschneiden 52, 53 bilden. Diese Pyramidenkanten 15b und 15d sind ebenfalls symmetrisch zu der Längsachse L ausgebildet. Die Figur 11f zeigt schließlich die Zentrierspitze 11 in Detailansicht. Hierbei sind zur Verdeutlichung der geometrischen Form der Zentrierspitze 11 für die Mulde 19a Höhenlinien HL angedeutet, welche die Zentrierspitze 11 mit gleich bleibender Höhe umlaufen, wobei Höhen in Richtung des Verlaufs der Längsachse L gemessen werden.

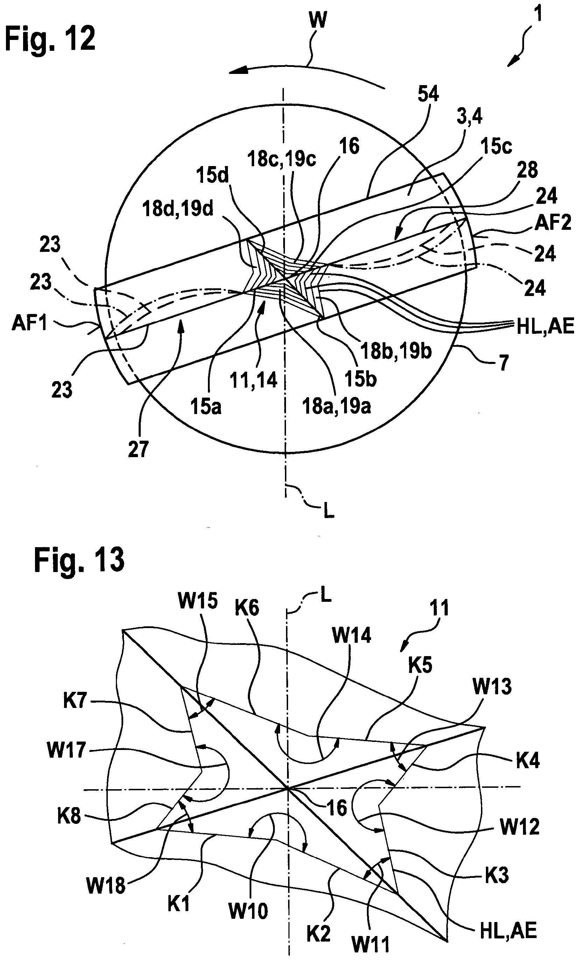

In der Figur 12 ist in schematischer Darstellung eine Draufsicht auf eine erfindungsgemäße Ausführungsvariante eines Gesteinsbohrwerkzeugs 1 gezeigt. Das Gesteinsbohrwerkzeug 1 umfasst einen als Schneidplatte 4 ausgebildeten Schneidkörper 3, welcher in einen Schlitz 54 eingesetzt ist, welcher in einer Wendel 7 des Gesteinsbohrwerkzeugs 1 ausgeführt ist. Der Schneidkörper 3 weist einen Zentrierspitze 11 mit einer Pyramide 14 mit vier Pyramidenkanten 15a bis 15d auf. Hierbei sind die Pyramidenkante 15a und 15c Bestandteil von zwei Hauptschneiden 27, 28, welche von einer Spitze 16 radial nach außen über den Schneidkörper 3 verlaufen. Seitenflächen 18a bis 18d, welche zwischen den Pyramidenkanten 15a bis 15d verlaufen, sind als Mulden 19a bis 19d ausgebildet. Durch mehrere Höhenlinien HL ist die Topografie der Zentrierspitze 11 verdeutlicht. Alle Höhenlinien HL der Zentrierspitze 11 bilden bei Betrachtung in Richtung einer senkrecht auf der Zeichnungsebene stehenden Längsachse L des Gesteinsbohrwerkzeugs 1 jeweils Achtecke AE, deren benachbarte Kanten K1 bis K8 abwechselnd Innenwinkel W10, W13, W15 und W17 größer 180° und Winkel W12, W14, W16 und W18 kleiner 180°mit einander einschließen. Zur besseren Erkennbarkeit ist die Zentrierspitze 11 mit einer Höhenlinie HL in der Figur 13 vergrößert dargestellt. Für den Verlauf von äußeren Schneidkanten 23 und 24 sind in der Figur 12 drei Varianten dargestellt. Mit durchgezogenen Linien ist ein radialer Verlauf der Schneidkanten 23 und 24 gezeigt. Mit einer gestrichelten Linie ist ein Verlauf der Schneidkanten 23 und 24 gezeigt, bei welchem die Schneidkanten 23 und 24 einen bogenförmigen Verlauf haben und entgegen einer Drehrichtung w des Gesteinsbohrwerkszeugs 1 bei Betrachtung in Richtung der Längsachse gebogen sind, wobei die Schneidkanten 23 und 24 zu Außenflächen des AF1 und AF2 des Schneidkörpers 3 hin wieder einen radialen Verlauf aufweisen. Eine dritte Ausführungsvariante sieht einen mit strichpunktierten Linien angedeuteten Verlauf der Schneidkanten 23 und 24 vor, bei welchen die Schneidkanten 23 und 24 von der Pyramide 14 bis zu den Außenflächen AF1 und AF2 bogenförmig verlaufen und entgegen der Drehrichtung w des Gesteinsbohrwerkzeugs 1 durchgebogen sind.

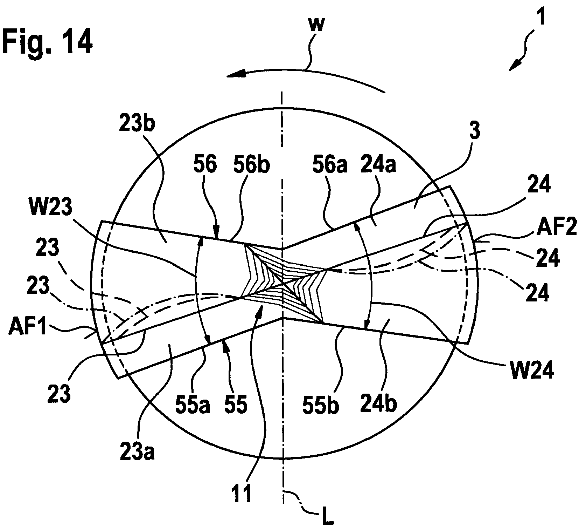

In der Figur 14 ist in schematischer Darstellung eine Draufsicht auf eine weitere erfindungsgemäße Ausführungsvariante eines Gesteinsbohrwerkzeugs 1 mit einem Schneidkörper 3 gezeigt. Bezüglich der Ausbildung der Zentrierspitze 11 und des Verlaufs der äußeren Schneidkanten 23 und 24 wird auf die Beschreibung zu den Figuren 12 und 13 verwiesen. Der Schneidkörper 3 ist zwischen Außenflächen AF1 und AF2 durch Seitenflächen 55, 56 begrenzt ist, wobei die erste Seitenfläche 55 in eine Spanfläche 23a der ersten Schneidkante 23 und eine Freifläche 24b der zweiten Schneidkante 24 übergeht und wobei die zweite Seitenfläche 56 in eine Freifläche 23b der ersten Schneidkante 23 und eine Spanfläche 24a der zweiten Schneidkante 24 übergeht und wobei die Seitenflächen 55, 56 im Bereich der ersten Schneidkante 23 und im Bereich der zweiten Schneidkante 24, in Richtung einer Längsachse L des Gesteinsbohrwerkzeugs 1 betrachtet, welche senkrecht auf der Zeichnungsebene steht, radial nach außen zueinander einen divergierenden Verlauf aufweisen. Teilflächen 55a und 56b der Seitenflächen 55 und 56, welche in die Freifläche 23a und die Spanfläche 23b der ersten Schneidkante 23 übergehen, schließen einen Winkel W23 ein, welcher zwischen 10° und 40° liegt. Teilflächen 56a und 55b der Seitenflächen 55 und 56, welche in die Freifläche 24a und die Spanfläche 24b der zweiten Schneidkante 24 übergehen, schließen einen Winkel W24 ein, welcher zwischen 10° und 40° liegt.

## Patentansprüche

1. Gesteinsbohrwerkzeug (1) zur dreh-schlagenden Bearbeitung von Beton, Gestein, Mauerwerk und dergleichen Materialien umfassend
- einen Bohrerkopf (2), welcher einen Schneidkörper (3) umfasst,
- eine zwischen dem Bohrerkopf (2) und einem Schaft (10) angeordnete Wendel (7),
- wobei sich der Schneidkörper (3) ununterbrochen über einen Nenndurchmesser (N) des Gesteinsbohrwerkzeugs (1) erstreckt,
- wobei der Schneidkörper (3) einen als Zentrierspitze (11) ausgebildeten Innenbereich (12) und einen in radialer Richtung an die Zentrierspitze (11) angrenzenden Außenbereich (13; 13a, 13b) umfasst,
- wobei der Außenbereich (13; 13a, 13b) gegenüber der Zentrierspitze (11) in Wirkrichtung (W) des Gesteinsbohrwerkzeugs (1) zurückversetzt ist,
- wobei die Zentrierspitze (11) als Pyramide (14) oder als Pyramidenstumpf ausgebildet ist und Pyramidenkanten (15a - 15d; 42a - 42f) aufweist,
- wobei zwischen den Pyramidenkanten (15a - 15d; 42a - 42f) Seitenflächen (18a - 18f) liegen,
- wobei eine Spitze (16) der Pyramide (14) bzw. des Pyramidenstumpfs von einer Längsmittelachse (L) des Bohrwerkzeugs (1) durchlaufen wird,
- wobei wenigstens eine Seitenfläche (18a - 18f) der Zentrierspitze (11) als Mulde (19a - 19d; 43a - 43f) ausgebildet ist und
- wobei eine Mulde (19a - 19d; 43a - 43f) eine konkave Fläche ist, welche zwischen zwei Pyramidenkanten (15a -15d; 42a - 42f) der Zentrierspitze (11) verläuft,
**dadurch gekennzeichnet, dass**
wenigstens eine der Pyramidenkanten (15a - 15d; 42a - 42f) zwischen ihrem Fußpunkt (F15a - F15d; F42a - F42f) und der Spitze (16) der Pyramide (14) bzw. des Pyramidenstumpfs auf wenigstens einem Abschnitt bei gleich bleibender Steigung zu der Längsachse (L) gebogen und/oder geknickt verläuft.

2. Gesteinsbohrwerkzeug nach Anspruch 1, **dadurch gekennzeichnet, dass** wenigstens zwei benachbarte Seitenflächen (18a - 18f) der Zentrierspitze (11) als Mulde (19a - 19d; 43a - 43f) ausgebildet sind.

3. Gesteinsbohrwerkzeug nach Anspruch 1, **dadurch gekennzeichnet, dass** alle Seitenflächen (18a - 18f) der Zentrierspitze (11) als Mulde (19a - 19d; 43a - 43f) ausgebildet sind.

4. Gesteinsbohrwerkzeug nach Anspruch 2 oder 3, **dadurch gekennzeichnet, dass** im Bereich der zwischen zwei Mulden (19a - 19d; 43a - 43f) liegenden Pyramidenkante (15a - 15d; 42a - 42f) der Zentrierspitze (11) ein Keil (33 - 36; 46a - 46f) gebildet wird, dessen Keilflächen durch Oberflächenabschnitte der benachbarten Mulden (19a - 19d; 43a - 43f) gebildet sind, wobei ein Keilwinkel des Keils (33 - 36; 46a - 46f) kleiner ist als ein Keilwinkel einer Zentrierspitze (11) mit ebenen Seitenflächen (18a - 18f).

5. Gesteinsbohrwerkzeug nach Anspruch 2, **dadurch gekennzeichnet, dass** eine in Drehrichtung (w) des Gesteinsbohrwerkzeugs (1) vor der Pyramidenkante (15a - 15d; 42a - 42f) liegende Mulde (19a - 19d; 43a - 43f) als Spanflächenmulde (29, 30, 44) ausgebildet ist, wobei eine in Drehrichtung (w) des Gesteinsbohrwerkzeugs (1) hinter der Pyramidenkante (15a - 15d; 42a - 42f) liegende Mulde (19a - 19d; 43a - 43f) als Freiflächenmulde (45) ausgebildet ist und wobei die Spanflächenmulde (29, 30, 44) zu der Pyramidenkante hin stärker ansteigt als die Freiflächenmulde (45).

6. Gesteinsbohrwerkzeug nach einem der vorhergehenden Ansprüche, **dadurch gekennzeichnet, dass** der Schneidkörper (3) insbesondere als Schneidplatte (4) ausgebildet ist, welche sich über den Nenndurchmesser (N) des Gesteinsbohrwerkzeugs (1) erstreckt, oder dass der Schneidkörper (3) insbesondere als Vollhartmetallkopf ausgebildet ist, welcher sich über den Nenndurchmesser (N) des Gesteinsbohrwerkzeugs (1) erstreckt.

7. Gesteinsbohrwerkzeug nach einem der vorhergehenden Ansprüche, **dadurch gekennzeichnet, dass** eine Grundfläche (G14) der Pyramide (14) insbesondere als Vieleck mit einer geraden Eckenzahl und insbesondere als Viereck oder als Sechseck ausgebildet ist oder insbesondere als Vieleck mit einer ungeraden Eckenzahl und insbesondere als Fünfeck ausgebildet ist.

8. Gesteinsbohrwerkzeug nach einem der vorhergehenden Ansprüche, **dadurch gekennzeichnet, dass** sich wenigstens eine der Mulden (19a - 19d; 43a - 43f) in Richtung eines Schwerpunkts (S) der Zentrierspitze (11) vertieft.

9. Gesteinsbohrwerkzeug nach einem der vorhergehenden Ansprüche, **dadurch gekennzeichnet, dass** wenigstens zwei der Pyramidenkanten (15a - 15d; 42a - 42f) als innere Schneidkanten (25, 26) ausgebildet sind und insbesondere als ununterbrochene Fortsetzung von äußeren Schneidkanten (23, 24) des Schneidkörpers (3) gebildet sind.

10. Gesteinsbohrwerkzeug nach einem der vorhergehenden Ansprüche, **dadurch gekennzeichnet, dass** wenigstens eine der Pyramidenkanten (15a - 15d; 42a - 42f) zwischen ihrem Fußpunkt (F42a - F42f) und der Spitze (16) der Pyramide (14) bzw. des Pyramidenstumpfs auf wenigstens einem Abschnitt (20a, 20b) insbesondere mit zunehmender Steigung zu der Längsachse (L) oder insbesondere mit abnehmender Steigung zu der Längsachse (L) oder insbesondere mit sprunghafter Änderung der Steigung zu der Längsachse (L) verläuft.

11. Gesteinsbohrwerkzeug nach einem der vorhergehenden Ansprüche, **dadurch gekennzeichnet, dass** äußere Schneidkanten (23, 24), welche außerhalb der Zentrierspitze (11) durch das Zusammentreffen einer Spanfläche (23a, 24a) und einer Freifläche (23b, 24b) gebildet sind, einen bogenförmigen Verlauf aufweisen, und in Richtung der Längsachse (L) betrachtet entgegen einer Drehrichtung (w) des Bohrwerkzeugs (1) durchgebogen sind.

12. Gesteinsbohrwerkzeug nach einem der vorhergehenden Ansprüche, **dadurch gekennzeichnet, dass** der Schneidkörper (3) durch Seitenflächen (55, 56) begrenzt ist, wobei die erste Seitenfläche (55) in eine Spanfläche (23a) der ersten Schneidkante (23) und eine Freifläche (24b) der zweiten Schneidkante (24) übergeht und wobei die zweite Seitenfläche (56) in eine Freifläche (23b) der ersten Schneidkante (23) und eine Spanfläche (24a) der zweiten Schneidkante (24) übergeht und wobei die Seitenflächen (55, 56) im Bereich der ersten Schneidkante (23) und im Bereich der zweiten Schneidkante (24), in der Längsrichtung (L) betrachtet, radial nach außen einen divergierenden Verlauf aufweisen.

13. Gesteinsbohrwerkzeug nach Anspruch 3, **dadurch gekennzeichnet, dass** wenigstens eine Höhenlinie (HL) der Zentrierspitze (11), welche eine Höhe in Richtung der Längsachse (L) angibt, ein Achteck (AE) bildet, bei welchen die zwischen den aufeinander folgenden Seitenkanten (K1 - K8) eingeschlossenen Innenwinkel (W10 - W18) abwechseln größer als 180° und kleiner als 180° sind.

14. Gesteinsbohrwerkzeug nach einem der vorhergehenden Ansprüche, **dadurch gekennzeichnet, dass** die Zentrierspitze (11) einen Durchmesser (DZ) aufweist, welcher proportional vom Nenndurchmesser (N) des Gesteinsbohrwerkzeugs (1) bzw. der Schneidplatte (3) abhängig ist und insbesondere zwischen 1/6 und 3/6 des Nenndurchmessers (N) liegt und vorzugsweise etwa 1/3 des Nenndurchmessers (N) beträgt.

## Claims

1. Rock drilling tool (1) for rotational percussive machining of concrete, rock, masonry and such materials, said tool including
- a drill head (2) which includes a cutting body (3),
- a helix (7) arranged between the drill head (2) and a shaft (10),
- wherein the cutting body (3) extends in an uninterrupted manner over a nominal diameter (N) of the rock drilling tool (1),
- wherein the cutting body (3) includes an inner region (12) realized as a centering tip (11) and an outer region (13; 13a, 13b) adjoining the centering tip (11) in the radial direction,
- wherein the outer region (13; 13a, 13b) is set back in the effective direction (W) of the rock drilling tool (1) in relation to the centering tip (11),
- wherein the centering tip (11) is realized as a pyramid (14) or as a truncated pyramid and has pyramidal edges (15a - 15d; 42a - 42f),
- wherein side surfaces (18a - 18f) lie between the pyramidal edges (15a - 15d; 42a - 42f),
- wherein a tip (16) of the pyramid (14) or of the truncated pyramid is passed through by a longitudinal center axis (L) of the drilling tool (1),
- wherein at least one side surface (18a - 18f) of the centering tip (11) is realized as a cavity (19a - 19d; 43a - 43f) and
- wherein a cavity (19a - 19d; 43a - 43f) is a concave surface which extends between two pyramidal edges (15a - 15d; 42a - 42f) of the centering tip (11),
**characterized in that**
at least one of the pyramidal edges (15a - 15d; 42a - 42f) extends between its root (F15a - F15d; F42a - F42f) and the tip (16) of the pyramid (14) or of the truncated pyramid in a curved and/or in a buckled manner along at least one portion keeping the gradient constant with respect to the longitudinal axis (L).

2. Rock drilling tool according to Claim 1, **characterized in that** at least two adjacent side surfaces (18a - 18f) of the centering tip (11) are realized as a cavity (19a - 19d; 43a - 43f).

3. Rock drilling tool according to Claim 1, **characterized in that** all the side surfaces (18a - 18f) of the centering tip (11) are realized as a cavity (19a - 19d; 43a - 43f).

4. Rock drilling tool according to Claim 2 or 3, **characterized in that** a wedge (33 - 36; 46a - 46f) is formed in the region of the pyramidal edge (15a-15d; 42a-42f) of the centering tip (11) lying between two cavities (19a - 19d; 43a - 43f) , the wedge surfaces of which wedge are formed by surface portions of the adjacent cavities (19a - 19d; 43a - 43f), wherein a wedge angle of the wedge (33 - 36; 46a - 46f) is smaller than a wedge angle of a centering tip (11) with planar side surfaces (18a - 18f).

5. Rock drilling tool according to Claim 2, **characterized in that** a cavity (19a - 19d; 43a - 43f) lying in front of the pyramidal edge (15a - 15d; 42a - 42f) in the direction of rotation (w) of the rock drilling tool (1) is realized as a face cavity (29, 30, 44), wherein a cavity (19a - 19d; 43a - 43f) lying behind the pyramidal edge (15a - 15d; 42a - 42f) in the direction of rotation (w) of the rock drilling tool (1) is realized as a flank cavity (45) and wherein the face cavity (29, 30, 44) ascends more steeply toward the pyramidal edge than the flank cavity (45).

6. Rock drilling tool according to one of the preceding claims, **characterized in that** the cutting body (3) is realized in particular as an insert (4) which extends over the nominal diameter (N) of the rock drilling tool (1), or **in that** the cutting body (3) is realized in particular as a solid carbide head which extends over the nominal diameter (N) of the rock drilling tool (1).

7. Rock drilling tool according to one of the preceding claims, **characterized in that** a base (G14) of the pyramid (14) is realized in particular as a polygon with an even number of corners and in particular as a tetragon or as a hexagon or is realized in particular as a polygon with an odd number of corners and in particular as a pentagon.

8. Rock drilling tool according to one of the preceding claims, **characterized in that** at least one of the cavities (19a - 19d; 43a - 43f) deepens in the direction of a center of gravity (S) of the centering tip (11).

9. Rock drilling tool according to one of the preceding claims, **characterized in that** at least two of the pyramidal edges (15a - 15d; 42a - 42f) are realized as inner cutting edges (25, 26) and are formed in particular as an uninterrupted continuation of the outer cutting edges (23, 24) of the cutting body (3).

10. Rock drilling tool according to one of the preceding claims, **characterized in that** at least one of the pyramidal edges (15a - 15d; 42a - 42f) extends between its root (F42a - F42f) and the tip (16) of the pyramid (14) or of the truncated pyramid in at least one portion (20a, 20b) in particular with increasing gradient with respect to the longitudinal axis (L) or in particular with reducing gradient with respect to the longitudinal axis (L) or in particular with erratic change in the gradient with respect to the longitudinal axis (L).

11. Rock drilling tool according to one of the preceding claims, **characterized in that** the outer cutting edges (23, 24), which are formed outside the centering tip (11) by the coinciding of a face (23a, 24a) and a flank (23b, 24b), have a curved development, and, when viewed in the direction of the longitudinal axis (L), are curved in opposition to a direction of rotation (w) of the drilling tool (1).

12. Rock drilling tool according to one of the preceding claims, **characterized in that** the cutting body (3) is defined by side surfaces (55, 56), wherein the first side surface (55) merges into a face (23a) of the first cutting edge (23) and a flank (24b) of the second cutting edge (24) and wherein the second side surface (56) merges into a flank (23b) of the first cutting edge (23) and a face (24a) of the second cutting edge (24) and wherein, when viewed in the longitudinal direction (L), the side surfaces (55, 56) have a diverging development radially outward in the region of the first cutting edge (23) and in the region of the second cutting edge (24).

13. Rock drilling tool according to Claim 3, **characterized in that** at least one contour line (HL) of the centering tip (11), which specifies a contour in the direction of the longitudinal axis (L), forms an octagon (AE), where the inner angles (W10 - W18) enclosed between the consecutive side edges (K1 - K8) are, in an alternating manner, more than 180° and less than 180°.

14. Rock drilling tool according to one of the preceding claims, **characterized in that** the centering tip (11) has a diameter (DZ) which is proportionally dependent on the nominal diameter (N) of the rock drilling tool (1) or of the insert (3) and is in particular between 1/6 and 3/6 of the nominal diameter (N) and is preferably approximately 1/3 of the nominal diameter (N).

## Revendications

1. Foret à roche (1) pour l'usinage par roto-percussion de béton, roche, maçonnerie et matériaux similaires, comprenant :
- une tête de foret (2) qui comprend un corps de coupe (3),
- une hélice (7) disposée entre la tête de foret (2) et une tige (10),
- le corps de coupe (3) s'étendant de manière ininterrompue sur un diamètre nominal (N) du foret à roche (1),
- le corps de coupe (3) comprenant une région antérieure (12) réalisée en tant que pointe de centrage (11) et une région extérieure (13 ; 13a, 13b) adjacente à la pointe de centrage (11) dans la direction radiale,
- la région extérieure (13 ; 13a, 13b) étant décalée en arrière par rapport à la pointe de centrage (11) dans la direction d'action (W) du foret à roche (1),
- la pointe de centrage (11) étant réalisée sous forme de pyramide (14) ou de tronc de pyramide et présentant des arêtes de pyramide (15a-15d ; 42a-42f),
- entre les arêtes de pyramide (15a-15d ; 42a-42f) se trouvant des surfaces latérales (18a-18f),
- une pointe (16) de la pyramide (14) ou du tronc de pyramide étant traversée par un axe médian longitudinal (L) du foret (1),
- au moins une surface latérale (18a-18f) de la pointe de centrage (11) étant réalisée sous forme de creux (19a-19d ; 43a-43f) et
- un creux (19a-19d ; 43a-43f) étant une surface concave qui s'étend entre deux arêtes de pyramide (15a-15d ; 42a-42f) de la pointe de centrage (11),
**caractérisé en ce**
**qu'**au moins l'une des arêtes de pyramide (15a-15d ; 42a-42f) est cintrée et/ou s'étend sous forme fléchie par rapport à l'axe longitudinal (L), entre sa base (F15a-F15d ; F42a-F42f) et la pointe (16) de la pyramide (14) ou du tronc de pyramide sur au moins une portion, pour un pas uniforme.

2. Foret à roche selon la revendication 1, **caractérisé en ce qu'**au moins deux surfaces latérales adjacentes (18a-18f) de la pointe de centrage (11) sont réalisées sous forme de creux (19a-19d ; 43a-43f).

3. Foret à roche selon la revendication 1, **caractérisé en ce que** toutes les surfaces latérales (18a-18f) de la pointe de centrage (11) sont réalisées sous forme de creux (19a-19d ; 43a-43f).

4. Foret à roche selon la revendication 2 ou 3, **caractérisé en ce que** dans la région de l'arête de pyramide (15a-15d ; 42a-42f), située entre deux creux (19a-19d ; 43a-43f) de la pointe de centrage (11), est formé un coin (33-36 ; 46a-46f), dont les surfaces de coin sont formées par des portions de surface des creux adjacents (19a-19d ; 43a-43f), un angle de coin du coin (33-36 ; 46a-46f) étant inférieur à un angle de coin d'une pointe de centrage (11) avec des surfaces latérales planes (18a-18f).

5. Foret à roche selon la revendication 2, **caractérisé en ce qu'**un creux (19a-19d ; 43a-43f) situé avant l'arête de pyramide (15a-15d ; 42a-42f) dans le sens de rotation (w) du foret à roche (1) est réalisé sous forme de creux de surface d'enlèvement de copeaux (29, 30, 44), un creux (19a-19d ; 43a-43f) situé derrière l'arête de pyramide (15a-15d ; 42a-42f) dans le sens de rotation (w) du foret à roche (1) étant réalisé sous forme de creux de surface de dépouille (45) et le creux de surface d'enlèvement de copeaux (29, 30, 44) montant avec une pente plus forte vers l'arête de pyramide que le creux de surface de dépouille (45).

6. Foret à roche selon l'une quelconque des revendications précédentes, **caractérisé en ce que** le corps de coupe (3) est réalisé notamment sous forme de plaquette de coupe (4) qui s'étend sur le diamètre nominal (N) du foret à roche (1) ou **en ce que** le corps de coupe (3) est réalisé notamment sous forme de tête en carbure monobloc qui s'étend sur le diamètre nominal (N) du foret à roche (1).

7. Foret à roche selon l'une quelconque des revendications précédentes, **caractérisé en ce qu'**une surface de base (G14) de la pyramide (14) est réalisée notamment sous forme de polygone avec un nombre de coins pair et notamment sous forme de carré ou d'hexagone ou notamment sous forme de polygone avec un nombre de coins impair et notamment sous forme de pentagone.

8. Foret à roche selon l'une quelconque des revendications précédentes, **caractérisé en ce qu'**au moins l'un des creux (19a-19d ; 43a-43f) est enfoncé dans la direction d'un centre de gravité (S) de la pointe de centrage (11).

9. Foret à roche selon l'une quelconque des revendications précédentes, **caractérisé en ce qu'**au moins deux arêtes de pyramide (15a-15d ; 42a-42f) sont réalisées sous forme d'arêtes de, coupe intérieures (25, 26) et sont formées notamment sous forme de prolongement ininterrompu d'arêtes de coupe extérieures (23, 24) du corps de coupe (3).

10. Foret à roche selon l'une quelconque des revendications précédentes, **caractérisé en ce qu'**au moins l'une des arêtes de pyramide (15a-15d ; 42a-42f) s'étend entre sa base (F42a-F42f) et la pointe (16) de la pyramide (14) ou du tronc de pyramide sur au moins une portion (20a, 20b), en particulier avec une pente croissante par rapport à l'axe longitudinal (L) ou notamment avec une pente descendante par rapport à l'axe longitudinal (L) ou notamment avec une variation par gradins de la pente par rapport à l'axe longitudinal (L).

11. Foret à roche selon l'une quelconque des revendications précédentes, **caractérisé en ce que** des arêtes de coupe extérieures (23, 24) qui sont formées à l'extérieur de la pointe de centrage (11) par la convergence d'une surface d'enlèvement de copeaux (23a, 24a) et d'une surface de dépouille (23b, 24b) présentent une allure de forme courbe et, considérées dans la direction de l'axe longitudinal (L), sont cintrées dans le sens opposé à un sens de rotation (w) du foret (1).

12. Foret à roche selon l'une quelconque des revendications précédentes, **caractérisé en ce que** le corps de coupe (3) est limité par des surfaces latérales (55, 56), la première surface latérale (55) se prolongeant par une surface d'enlèvement de copeaux (23a) de la première arête de coupe (23) et par une surface de dépouille (24b) de la deuxième arête de coupe (24) et la deuxième surface latérale (56) se prolongeant par une surface de dépouille (23b) de la première arête de coupe (23) et par une surface d'enlèvement de copeaux (24a) de la deuxième arête de coupe (24) et les surfaces latérales (55, 56), dans la région de la première arête de coupe (23) et dans la région de la deuxième arête de coupe (24), considérées dans la direction longitudinale (L) présentant une allure divergente radialement vers l'extérieur.

13. Foret à roche selon la revendication 3, **caractérisé en ce qu'**au moins une ligne de hauteur (HL) de la pointe de centrage (11) qui indique une hauteur dans la direction de l'axe longitudinal (L), forme un octogone (AE), les angles internes (W10-W18) inclus entre les arêtes latérales successives (K1-K8) étant en alternance supérieurs à 180° et inférieurs à 180°.

14. Foret à roche selon l'une quelconque des revendications précédentes, **caractérisé en ce que** la pointe de centrage (11) présente un diamètre (DZ) qui dépend de manière proportionnelle du diamètre nominal (N) du foret à roche (1) ou de la plaquette de coupe (3) et qui est notamment situé entre 1/6 et 3/6 du diamètre nominal (N) et qui vaut de préférence approximativement 1/3 du diamètre nominal (N).
